# FASCICULE DE BREVET EUROPEEN

(11) **EP 3 117 573 B1**
(45) Date de publication et mention de la délivrance du brevet: **12.09.2018**
(21) Numéro de dépôt: 15709521.7
(22) Date de dépôt: 13.03.2015
(51) Int. Cl.: H04W 28/02

(54) **PROCÉDÉ DE GESTION DE CONGESTION D'UN LIEN DE TRANSMISSION DANS UN RÉSEAU DE COMMUNICATION PAR PAQUETS**
VERFAHREN ZUR VERWALTUNG DER ÜBERLASTUNG EINER ÜBERTRAGUNGSVERBINDUNG EINEM PAKETÜBERTRAGUNGSNETZ
METHOD OF MANAGING CONGESTION OF A TRANSMISSION LINK IN A PACKET COMMUNICATION NETWORK

(30) Priorité: 14.03.2014 FR 1400619
(43) Date de publication de la demande: 18.01.2017
(73) Titulaire: Airbus Defence and Space SAS, 78130 Les Mureaux (FR)
(72) Inventeur: CARTIGNY, Marc, F-78400 Chatou (FR); POLETTI, Claude, F-92260 Fontenay aux Roses (FR); KLOTZ, Olivier, F-94500 Champigny sur Marne (FR)
(74) Mandataire: Cabinet Le Guen Maillet
(86) Numéro de dépôt international: PCT/EP2015/055348
(87) Numéro de publication internationale: WO 2015/136095

(56) Documents cités:
- WO-A1-2012/055783
- US-A1- 2009 196 182

## Description

La présente invention concerne une gestion de situations de congestion, pour une ou plusieurs classes de service, sur un lien de transmission au sein d'un réseau de communication par paquets.

Les réseaux de communication par paquets sont constitués d'une pluralité de noeuds de communication reliés entre eux par des liens de communication. Ces noeuds de communication peuvent être des équipements terminaux, tels que des postes informatiques, des terminaux de communication mobiles ou encore des serveurs d'application. Ces noeuds de communication peuvent également être des équipements intermédiaires, tels que des commutateurs ou des routeurs, qui servent à assurer une interconnexion des équipements terminaux et qui servent à assurer un routage de données entre les équipements terminaux.

Les liens de communication sont basés sur des technologies de transmission physique très diverses, qu'elles soient filaires (fibre optique, Ethernet,...) ou sans-fil (Wi-Fi, WiMax, liaison par satellite,...). Ces technologies de transmission conduisent intrinsèquement à des propriétés différentes de canal de transmission, notamment en termes de variabilité de bande passante disponible.

Ces réseaux de communication par paquets servent à mettre en oeuvre une grande diversité de services, comme par exemple des services de type VoIP (*Voice over IP* en anglais), des services de transmission de programmes audiovisuels ou des services WEB. Ces services ont des besoins en termes de bande passante et/ou de latence qui dépendent du service considéré. Pour permettre le développement de services ayant des besoins contraints en termes de bande passante et/ou de latence sur des réseaux de communication par paquets, des technologies de gestion de qualité de service QoS (*Quality of Service* en anglais) sont mises en oeuvre. Ces technologies sont basées sur la définition d'un ensemble de classes de services CoS (*Class of Service* en anglais), chacune correspondant à des contraintes de transmission spécifiquement établies pour supporter un service donné. C'est par exemple le cas de la technologie DiffServ (*Differentiated Services* en anglais), telle que définie notamment dans les documents normatifs RFC 2474 et 2475. Des priorités sont respectivement attribuées aux différentes classes de service et les équipements intermédiaires d'un réseau de communication qui font face à une congestion se basent sur ces priorités pour supprimer des paquets parmi les moins prioritaires et ainsi favoriser la transmission de paquets parmi les plus prioritaires. On dit alors que les paquets sont *colorés,* c'est-à-dire qu'ils sont respectivement marqués par des classes de service CoS et que les équipements réseau amenés à traiter lesdits paquets doivent appliquer auxdits paquets un plan de QoS dépendant desdites classes de service CoS.

Les liens de communication les plus délicats à gérer en terme de qualité de service sont les liens basés sur des technologies de communication sans-fil, puisque de tels liens sont sujets à de fortes variations de bande passante en fonction de changements d'environnement (atténuation de signal, bruit, interférences,...). C'est notamment le cas des liaisons par satellite dont les performances dépendent des conditions climatiques (pluie, brouillard,...).

On pourra noter le document de brevet WO 2012/055783 A1 qui décrit un mécanisme de détection de congestion, dans lequel des messages sont entre un maître et un ou plusieurs esclaves pour échanger des informations de débits de données transmises et reçues, ou des informations permettant de calculer des débits de données transmises et reçues.

Il est alors souhaitable, dans ces circonstances, de détecter des situations de congestion, qui peuvent se produire, sur un même lien de transmission, vis-à-vis d'une ou plusieurs classes de service et ne pas se produire vis-à-vis d'une ou plusieurs autres.

Il est aussi souhaitable de fournir une solution qui soit indépendante d'un protocole de transport (couche transport du modèle OSI (*Open Systems Interconnection* en anglais)) utilisé pour transporter les données sur ledit lien de transmission.

Il est aussi souhaitable de fournir une solution qui respecte les préconisations d'architecture réseau du modèle OSI.

Il est aussi souhaitable de fournir une solution qui soit simple à mettre en oeuvre et qui notamment ne nécessite pas de synchronisation temporelle des équipements réseau au sein du réseau de communication.

L'invention concerne un procédé de gestion de congestion d'un lien de transmission depuis un premier équipement réseau jusqu'à un second équipement réseau dans un réseau de communication par paquets. Le premier équipement réseau est associé à une première application de détection de congestion et le second équipement réseau est associé à une seconde application de détection de congestion, et ladite seconde application met en oeuvre conjointement avec ladite première application un mécanisme de contrôle de congestion par classe de service sur ledit lien de transmission dans lequel ladite seconde application effectue les étapes suivantes, pour au moins une classe de service : recevoir, pour chaque dite classe de service, un premier message de contrôle en provenance de la première application de détection de congestion, le premier message de contrôle incluant une information représentative d'un premier volume de données colorées par ladite classe de service et transmises par le premier équipement réseau jusqu'à un premier instant ; recevoir, pour chaque dite classe de service, un second message de contrôle en provenance de la première application de détection de congestion, le second message de contrôle incluant une information représentative d'un second volume de données colorées par ladite classe de service et transmises par le premier équipement réseau jusqu'à un second instant ; déterminer un premier écart entre ledit premier volume de données et ledit second volume de données ; sur réception de chaque premier message de contrôle, obtenir une information représentative d'un troisième volume de données colorées par ladite classe de service et reçues par le second équipement réseau via ledit lien de transmission jusqu'à un troisième instant ; sur réception de chaque second message de contrôle, obtenir une information représentative d'un quatrième volume de données colorées par ladite classe de service et reçues par le second équipement réseau via ledit lien de transmission jusqu'à un quatrième instant ; déterminer, pour chaque classe de service, un second écart entre ledit troisième volume de données et ledit quatrième volume de données ; et générer ou non, pour chaque classe de service, un signal d'alarme représentatif d'une congestion sur ledit lien de transmission des données colorées par ladite classe de service, en fonction d'une différence entre ledit premier écart et ledit second écart pour ladite classe de service.

Dans un mode de réalisation particulier, la première application de détection de congestion effectue les étapes suivantes : transmettre chaque premier message de contrôle à destination de ladite seconde application, chaque premier message de contrôle étant coloré avec la classe de service pour laquelle ledit premier message est destiné ; et transmettre chaque second message de contrôle à destination de la seconde application, chaque second message de contrôle étant coloré avec la classe de service pour laquelle ledit second message est destiné.

Dans un mode de réalisation particulier, la première application de détection de congestion obtient l'information représentative dudit premier volume et l'information représentative dudit second volume auprès du premier équipement réseau par envoi de messages colorés avec la classe de service de plus forte priorité ; et la seconde application de détection de congestion obtient l'information représentative dudit troisième volume et l'information représentative dudit quatrième volume auprès du second équipement réseau par envoi de messages colorés avec la classe de service de plus forte priorité.

Dans un mode de réalisation particulier, chaque premier message et chaque second message comporte un en-tête de niveau réseau permettant de colorer ledit message avec une classe de service, et chaque premier message et chaque second message inclut un corps de message de niveau application incluant une information représentative de ladite classe de service.

Dans un mode de réalisation particulier, la première application de détection de congestion transmet des messages de contrôles en séquence, et la seconde application de détection de congestion effectue les étapes suivantes : effectuer une comparaison, pour chaque classe de service, entre la différence entre ledit premier écart et ledit second écart avec un seuil prédéfini pour plusieurs couples de messages de contrôle reçus ; et décider de générer un signal d'alarme de congestion du lien de transmission pour une classe de service, lorsque la différence entre ledit premier écart et ledit second écart est supérieure, pour ladite classe de service, au seuil prédéfini pour un nombre N ≥ 1 de couples successifs.

Dans un mode de réalisation particulier, la seconde application met en oeuvre conjointement avec ladite première application un mécanisme de contrôle de congestion globale sur ledit lien de transmission, dans lequel ladite seconde application effectue les étapes suivantes : recevoir un premier message de contrôle général en provenance de la première application de détection de congestion, le premier message de contrôle général incluant une information représentative d'un cinquième volume de données transmises par le premier équipement réseau jusqu'à un cinquième instant, indépendamment d'une coloration desdites données transmises ; recevoir un second message de contrôle général en provenance de la première application de détection de congestion, le second message de contrôle général incluant une information représentative d'un sixième volume de données transmises par le premier équipement réseau jusqu'à un sixième instant, indépendamment d'une coloration desdites données transmises ; déterminer un troisième écart entre ledit cinquième volume de données et ledit sixième volume de données ; sur réception de chaque premier message de contrôle général, obtenir une information représentative d'un septième volume de données reçues par le second équipement réseau via ledit lien de transmission jusqu'à un septième instant, indépendamment d'une coloration desdites données reçues ; sur réception de chaque second message de contrôle général, obtenir une information représentative d'un huitième volume de données reçues par le second équipement réseau via ledit lien de transmission jusqu'à un huitième instant, indépendamment d'une coloration desdites données reçues ; déterminer un quatrième écart entre ledit septième volume de données et ledit huitième volume de données ; et générer ou non un signal d'alarme représentatif d'une congestion globale sur ledit lien de transmission, en fonction d'une différence entre ledit troisième écart et ledit quatrième écart.

Dans un mode de réalisation particulier, lesdites première et seconde applications reçoivent un ordre d'activation du mécanisme de contrôle de congestion globale sur ledit lien de transmission, et la seconde application génère un signal d'alarme représentatif d'une rupture du lien de transmission lorsqu'une temporisation de durée prédéfinie s'écoule sans recevoir de message de contrôle général.

Dans un mode de réalisation particulier, ladite seconde application met en oeuvre conjointement avec ladite première application un mécanisme de contrôle d'amélioration de conditions de transmission sur ledit lien de transmission pendant lequel mécanisme de contrôle de congestion par classe de service est stoppé et dans lequel ladite seconde application effectue les étapes suivantes, pour au moins une classe de service : recevoir en provenance de ladite première application, pour chaque classe de service, un flux de paquets de test coloré avec ladite classe de service ; déterminer, pour chaque flux reçu, un taux de perte de paquets sur ledit lien de transmission ; et générer un rapport de perte, pour chaque classe de service, incluant une information représentative dudit taux de perte.

Dans un mode de réalisation particulier, dans le cadre du mécanisme de contrôle d'amélioration de conditions de transmission sur ledit lien de transmission, ladite première application effectue l'étape suivante : générer ledit flux de paquets de test sous forme d'une séquence de paquets de test pour chaque classe de service, chaque premier et/ou chaque dernier paquet de ladite séquence étant dupliqué un nombre prédéfini de fois.

Dans un mode de réalisation particulier, un centre de gestion d'alarme fait appliquer un plan de qualité de service plus restrictif dans le réseau de communication par paquets en fonction de signaux d'alarmes générés par ladite seconde application, le centre de gestion d'alarme ordonne auxdites première et secondes applications de mettre en oeuvre le mécanisme de contrôle d'amélioration de conditions de transmission sur ledit lien de transmission après application du plan de qualité de service plus restrictif, et le centre de gestion d'alarme fait appliquer un plan de qualité de service moins restrictif dans le réseau de communication par paquets en fonction de rapports de perte générés par ladite seconde application dans le cadre du mécanisme de contrôle d'amélioration de conditions de transmission sur ledit lien de transmission.

Dans un mode de réalisation particulier, chaque message échangé entre le centre de gestion d'alarmes et lesdites première et seconde applications sont colorés avec la classe de service de plus haute priorité.

L'invention concerne également un dispositif et un système correspondants, tels que définis dans les revendications annexées.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un premier système de communication dans lequel la présente invention peut être mise en oeuvre ;
- la Fig. 2 illustre schématiquement un exemple d'architecture matérielle d'au moins un équipement du premier système de communication ;
- la Fig. 3 illustre schématiquement un second système de communication dans lequel la présente invention peut être mise en oeuvre ;
- la Fig. 4 illustre schématiquement un format de messages de contrôle utilisés pour détecter une congestion sur un lien de transmission du premier ou du second système de communication ;
- la Fig. 5 illustre schématiquement un algorithme de transmission d'informations relatives à un volume de données transmises par classe de service via ledit lien de transmission ;
- la Fig. 6 illustre schématiquement un algorithme de détection de congestion par classe de service à partir des informations relatives au volume de données transmises via ledit lien de transmission ;
- la Fig. 7 illustre schématiquement un algorithme de transmission d'informations relatives à un volume global de données transmises via ledit lien de transmission ;
- la Fig. 8 illustre schématiquement un algorithme de détection de congestion globale du lien de transmission à partir des informations relatives au volume global de données transmises via ledit lien de transmission ;
- la Fig. 9 illustre schématiquement un algorithme de détection de rupture dudit lien de transmission ;
- la Fig. 10 illustre schématiquement un premier algorithme de transmission d'un flux de données de test via ledit lien de transmission ;
- la Fig. 11 illustre schématiquement un premier algorithme de détection d'amélioration de conditions de transmission par classe de service sur le lien de transmission, à partir d'informations relatives au flux de données de test ;
- la Fig. 12 illustre schématiquement un second algorithme de transmission d'un flux de données de test via ledit lien de transmission ; et
- la Fig. 13 illustre schématiquement un second algorithme de détection d'amélioration de conditions de transmission par classe de service sur le lien de transmission, à partir d'informations relatives au flux de données de test.

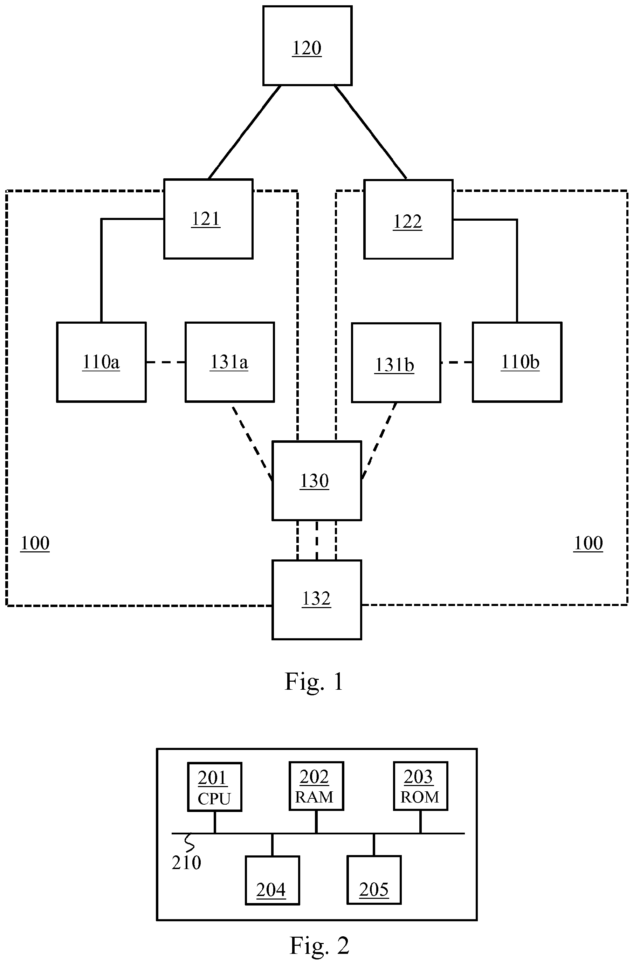

La Fig. 1 illustre schématiquement un premier système de communication dans lequel la présente invention peut être mise en oeuvre. Le premier système de communication est un système de communication par paquets, reposant préférentiellement sur la technologie IP (*Internet Protocol* en anglais).

Le premier système de communication comporte un premier équipement réseau 110a (*network equipment* en anglais) et un second équipement réseau 110b interconnectés par une liaison satellite. La liaison satellite est assurée grâce à un premier équipement émetteur-récepteur (*transceiver equipment* en anglais) 121 connecté au premier équipement réseau 110a et à un second équipement émetteur-récepteur 122 connecté au second équipement réseau 110b, les premier 121 et second 122 équipements émetteurs-récepteurs communiquant l'un avec l'autre via un satellite 120. Les premier 121 et second 122 équipements émetteurs-récepteurs incluent respectivement des modems et des antennes permettant de mettre en oeuvre une communication sans-fil via le satellite 120. D'autres types de technologies de communication peuvent être mis en oeuvre pour réaliser un lien de transmission depuis le premier équipement réseau 110a jusqu'au second équipement réseau 110b, et vice versa, comme par exemple des technologies filaires ou sans-fil précédemment mentionnées. Le lien de transmission peut aussi inclure un ou plusieurs autres équipements réseau, de manière transparente pour les premier 110a et second 110b équipements réseau.

Plusieurs domaines de communication peuvent exister dans un même système de communication. Un unique domaine de communication 100 est représenté sur la Fig. 1, alors que plusieurs domaines de communication sont représentés sur la Fig. 2. Pour marquer la frontière entre domaines de communication, des dispositifs de chiffrement-déchiffrement sont utilisés pour rendre les domaines de communication hermétiques les uns par rapport aux autres.

Des équipements terminaux connectés au premier équipement réseau 110a, éventuellement via un ou plusieurs autres équipements réseau, peuvent ainsi communiquer avec d'autres équipements terminaux connectés au second équipement réseau 110b, aussi éventuellement via un ou plusieurs autres équipements réseau. Ces équipements terminaux peuvent ainsi s'échanger des données selon différentes classes de service CoS, en bénéficiant du plan de QoS appliqué au sein du domaine de communication 100.

Le lien de transmission depuis le premier équipement réseau 110a jusqu'au second équipement réseau 110b, et le lien de transmission depuis le second équipement réseau 110b jusqu'au premier équipement réseau 110a, sont sujets à des variations de conditions de transmission, ce qui peut entraîner des situations de congestion pour des flux de données en fonction de classes de services associées auxdits flux de données. D'autres liens de transmission du premier système de communication peuvent être concernés par de telles variations de conditions de transmission, ce qui nécessite de surveiller chacun de ces liens de transmission afin de détecter et de gérer de telles situations de congestion. Considérons par la suite à titre illustratif que le lien de transmission depuis le premier équipement réseau 110a jusqu'au second équipement réseau 110b soit ainsi à surveiller.

Dans le cadre de la présente invention, chaque équipement réseau à une extrémité d'un lien de communication à surveiller est associé à une application de détection de congestion CDA (*Congestion Detection Application* en anglais). Une telle application est donc de niveau sept (couche application, *application layer* en anglais) dans le modèle OSI. L'application CDA associée à un équipement réseau peut être mise en oeuvre par ledit équipement réseau ou par une machine distincte dans le même domaine de communication 100 que ledit équipement réseau. Dans ce dernier cas, l'application CDA utilise préférentiellement le protocole SNMP (*Simple Network Management Protocol* en anglais) pour communiquer avec l'équipement réseau auquel ladite application CDA est associée. D'autres méthodes de communication par messages peuvent être mises en oeuvre, reposant par exemple sur une interface de programmation applicative API (*Application Programming Interface* en anglais) dans un modèle de type REST (*REpresentational State Transfer* en anglais). Dans un mode de réalisation particulier, les messages échangés entre chaque application CDA et l'équipement réseau associé à ladite application CDA sont colorés avec la classe de service CoS de plus forte priorité, *e.g.* en utilisant le code de classe de service DSCP *(DiffServ CodePoint* en anglais, tel que défini dans le document normatif RFC 2474) de type CS7.

Pour permettre de détecter des améliorations de conditions de transmission sur le lien de transmission à surveiller, ladite application CDA est située du même côté dudit lien de transmission à surveiller que l'équipement réseau auquel ladite application CDA est associée.

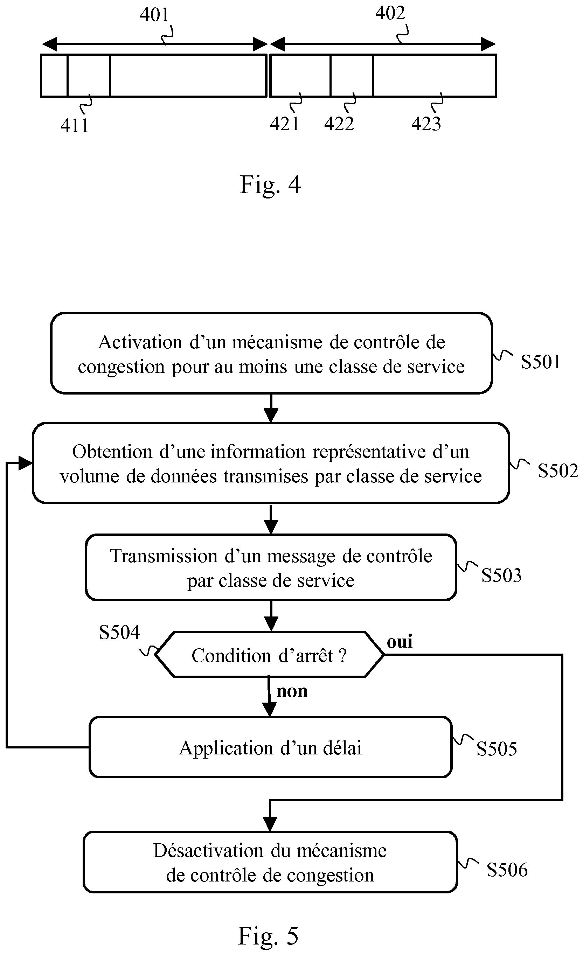

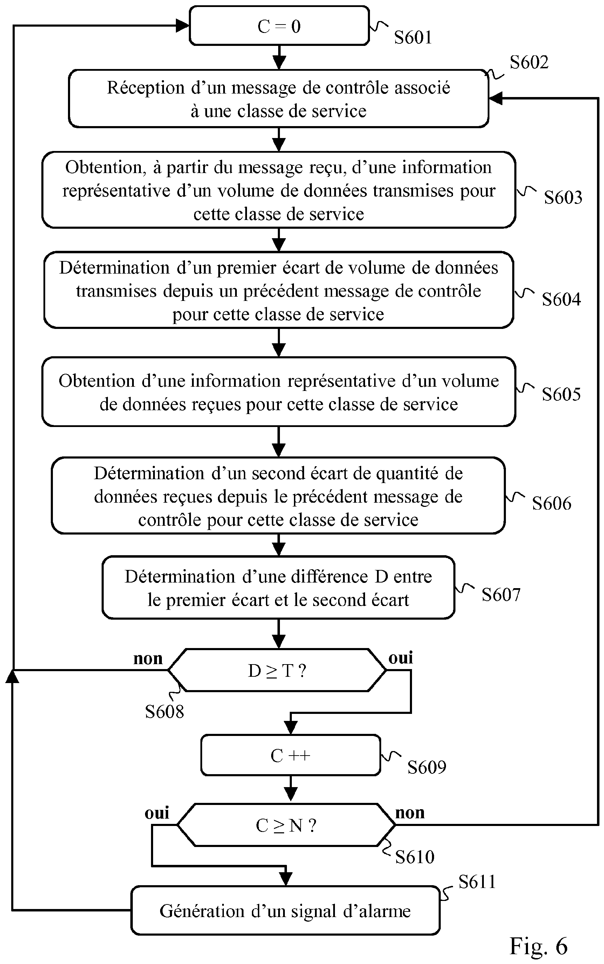

Ainsi, pour surveiller le lien de transmission depuis le premier équipement réseau 110a jusqu'au second équipement réseau 110b, le premier équipement réseau 110a est associé à une première application CDA 131a et le second équipement réseau 110b est associé à une seconde application CDA 131b. La première application CDA 131a est adaptée pour obtenir du premier équipement réseau 110a des informations de volume de données transmises par ledit premier équipement réseau 110a sur le lien de transmission à surveiller, et ce pour une ou plusieurs classes de service CoS prédéterminées. La première application CDA 131a est en outre adaptée pour transmettre lesdites informations à la seconde application CDA 131b, et la seconde application CDA 131b est adaptée pour recevoir lesdites informations transmises par la première application CDA 131a. La seconde application CDA 131b est en outre adaptée pour obtenir des informations de volume de données reçues par le second équipement réseau 110b via le lien de transmission à surveiller, et ce pour ladite ou lesdites classes de service CoS prédéterminées. La seconde application CDA 131b est en outre adaptée pour calculer un premier écart de volume de telles données transmises par le premier équipement réseau 110a et un second écart de volume de telles données reçues par le second équipement réseau 110b, et pour effectuer une comparaison desdits premier et second écarts. La seconde application CDA 131b est en outre adaptée pour générer ou pas des signaux d'alarme de congestion pour une ou plusieurs classes de service CoS, en fonction de ladite comparaison. Dans ce cadre, le comportement de la première application CDA 131a est détaillé ci-après en relation avec la Fig. 5, et le comportement de la seconde application CDA 131b est détaillé ci-après en relation avec la Fig. 6.

Détecter des situations de congestion pour une ou plusieurs classes de service prédéfinies permet de déterminer à quel moment appliquer un plan de QoS plus restrictif. Un tel plan de QoS est préférentiellement appliqué par un centre de gestion d'alarmes AMC (*Alarm Management Centre* en anglais) 130 ou par un centre QoSMC (*QoS Management Centre* en anglais) que le centre AMC 130 tient informé des situations de congestion.

Le centre AMC 130 appartient au même domaine de communication 100 que les première 131a et seconde 131b applications CDA, et est adapté pour recevoir les signaux d'alarmes générés par la seconde application CDA 131b. Le centre AMC 130 est alors adapté pour appliquer des modifications de plan de QoS en fonction des signaux d'alarmes générés par la seconde application CDA 131b. Le centre AMC 130 peut être adapté pour gérer une surveillance de plusieurs liens de communication du premier système de communication. Le centre AMC 130 est ainsi adapté pour recevoir des signaux d'alarme d'une pluralité d'applications CDA et pour appliquer des modifications de plan de QoS en fonction des signaux d'alarmes générés par ladite pluralité d'applications CDA.

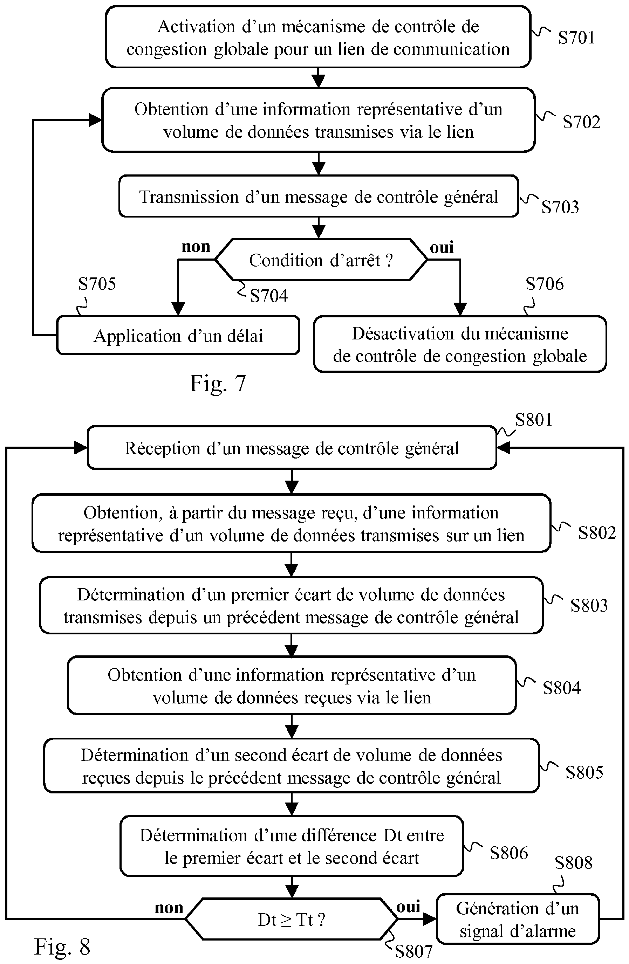

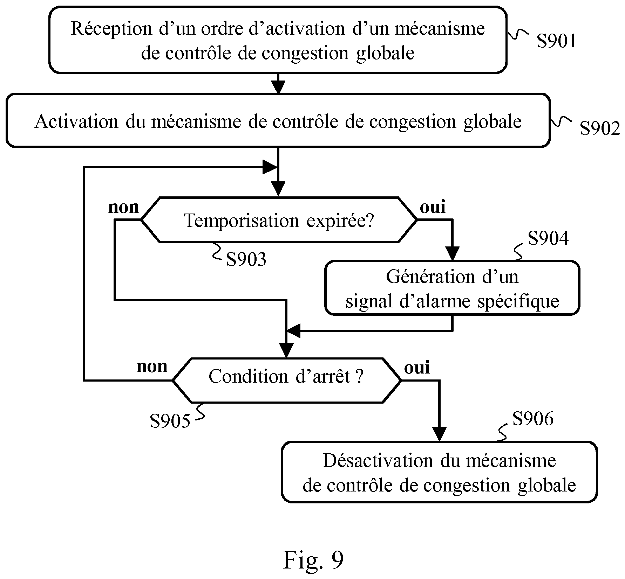

Dans un mode de réalisation particulier, pour permettre de détecter des situations de rupture du lien de transmission à surveiller, la première application CDA 131a est adaptée pour obtenir du premier équipement réseau 110a des informations de volume de données transmises par ledit premier équipement réseau 110a sur le lien de transmission à surveiller, et ce indépendamment des classes de service CoS utilisées. La première application CDA 131b est en outre adaptée pour transmettre lesdites informations à la seconde application CDA 131b et la seconde application CDA 131b est adaptée pour recevoir lesdites informations transmises par la première application CDA 131a. La seconde application CDA 131b est en outre adaptée pour obtenir des informations de volume de données reçues par le second équipement réseau 110b via le lien de transmission à surveiller, et ce indépendamment des classes de service CoS utilisées. La seconde application CDA 131b est en outre adaptée pour calculer un troisième écart de volume de telles données transmises par le premier équipement réseau 110a et un quatrième écart de volume de telles données reçues par le second équipement réseau 110b, et pour effectuer une comparaison desdits troisième et quatrième écarts. La seconde application CDA 131b est en outre adaptée pour générer ou pas des signaux d'alarme de congestion pour ledit lien de transmission indépendamment de toute classe de service CoS, en fonction de ladite comparaison. La seconde application CDA 131b est en outre adaptée pour générer ou pas des signaux d'alarme de rupture dudit lien de transmission, lorsque la seconde application CDA 131b ne reçoit pas lesdites informations de la première application CDA 131a pendant une période de temps prédéfinie. Dans ce cadre, le comportement de la première application CDA 131a est détaillé ci-après en relation avec la Fig. 7, et le comportement de la seconde application CDA 131b est détaillé ci-après en relation avec les Figs. 8 et 9.

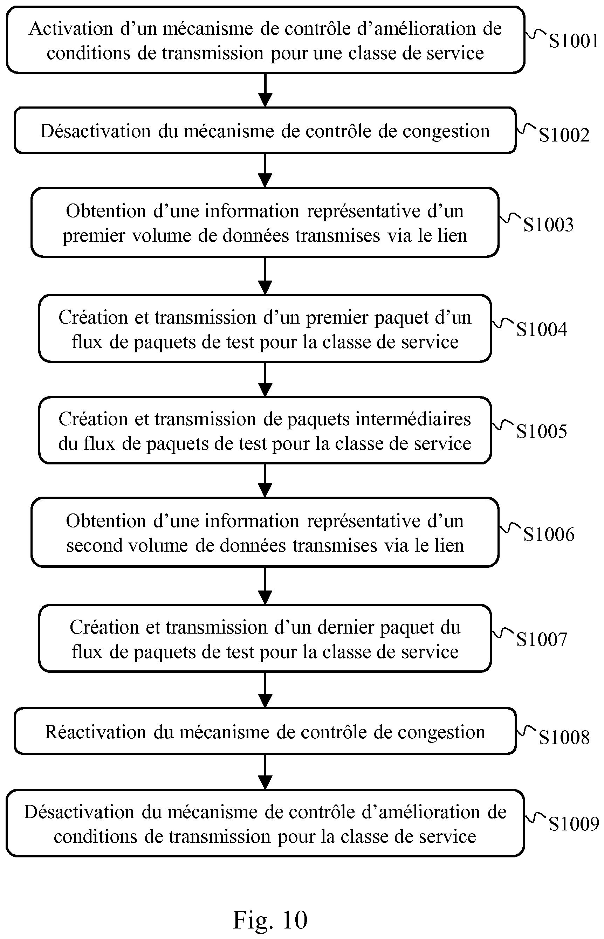

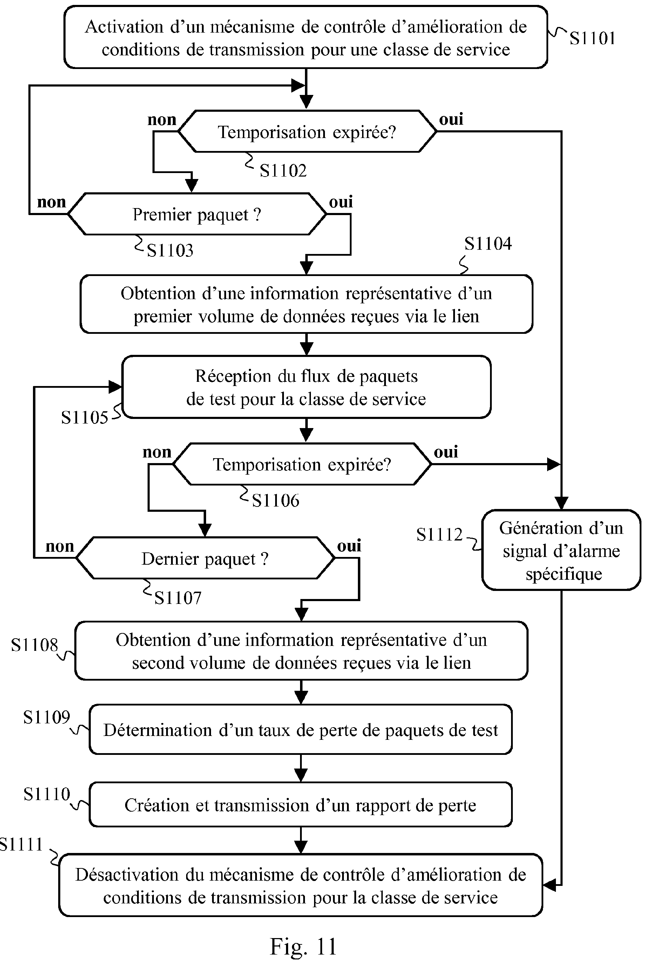

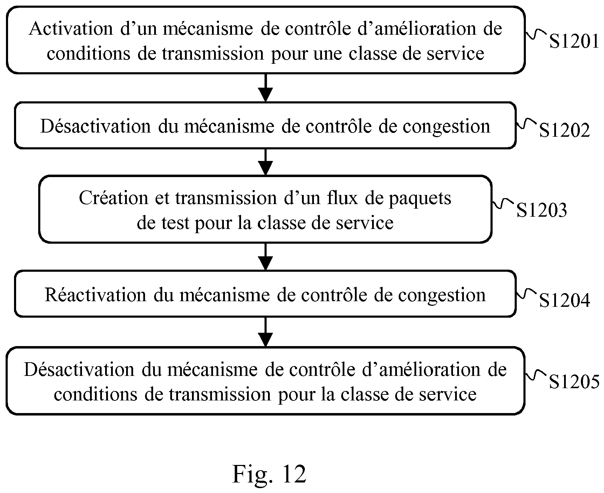

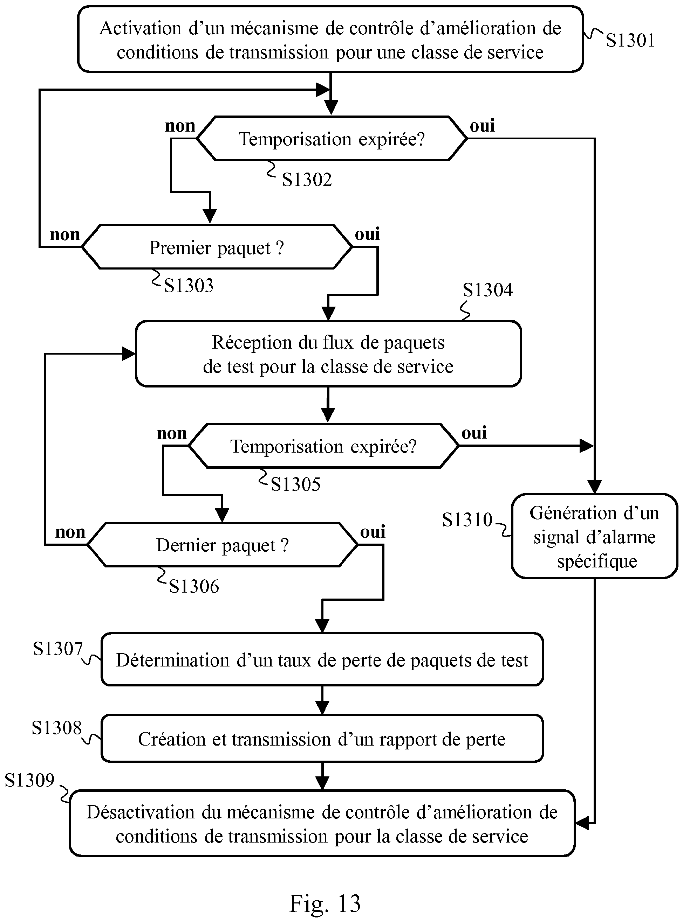

Dans un mode de réalisation particulier, pour permettre de détecter une amélioration des conditions de transmission sur le lien de transmission depuis le premier équipement réseau 110a jusqu'au second équipement réseau 110b, la première application CDA 131a est adaptée pour créer et transmettre à la seconde application CDA 131b, via le lien de transmission à surveiller, un flux de paquets de test pour chaque classe de service CoS pour laquelle une congestion a précédemment été détectée. La seconde application CDA 131b est alors adaptée pour recevoir chaque flux de paquets de test transmis par la première application CDA 131a et pour déterminer un taux de perte de données dans le cadre de la transmission dudit flux via le lien de transmission à surveiller. La seconde application CDA 131b est alors adaptée pour générer et transmettre au centre AMC 130 un rapport de test incluant une information représentative dudit taux de perte. Le centre AMC 130 est alors adapté pour recevoir ledit rapport de test et pour appliquer des modifications de plan de QoS en fonction dudit rapport de test. Détecter des situations d'amélioration des conditions de transmission pour une ou plusieurs classes de service prédéfinies permet de déterminer à quel moment appliquer un plan de QoS moins restrictif. Dans ce cadre, le comportement de la première application CDA 131a est détaillé ci-après en relation avec la Fig. 10, et le comportement de la seconde application CDA 131b est détaillé ci-après en relation avec la Fig. 11, dans un premier mode de réalisation; et le comportement de la première application CDA 131a est détaillé ci-après en relation avec la Fig. 12, et le comportement de la seconde application CDA 131b est détaillé ci-après en relation avec la Fig. 13, dans un second mode de réalisation.

Dans le cas où le lien de transmission à surveiller est le lien de transmission depuis le second équipement réseau 110b jusqu'au premier équipement réseau 110a, les rôles des première 131a et seconde 131b applications CDA sont inversés.

Le premier système de communication peut inclure une station de gestion réseau NMS *(Network Management Station* en anglais) 132 pour le domaine de communication 100 auquel appartiennent les premier 110a et second 110b équipements réseau. La station NMS 132 est en charge de mettre en oeuvre des mécanismes FCAPS (*Fault, Configuration, Administration, Performance, Security* en anglais), selon le modèle ISO (*International Organization for Standardization* en anglais) de gestion de réseau. Le centre AMC 130 peut alors être adapté pour informer la station NMS 132 de signaux d'alarme générés par les applications CDA dudit domaine de communication 100. La station NMS 132 peut aussi recevoir de tels signaux d'alarme directement des applications CDA du domaine de communication 100, sans passer par le centre AMC 130. Cela permet à un opérateur virtuel du premier système de communication d'être alerté des situations de congestion détectées. La station NMS 132 peut être en charge d'activer et de configurer les applications CDA du premier système de communication, éventuellement via le centre AMC 130. Une telle configuration des applications CDA inclut notamment une phase d'association de chaque application CDA à un équipement réseau, et une phase appairage des applications CDA par deux pour surveiller un lien de transmission entre les deux équipements réseau auxquels lesdites applications CDA sont respectivement associées.

Un protocole de découverte peut être mis en oeuvre pour permettre au centre AMC 130, et éventuellement à la station NMS 132, de découvrir les applications CDA existant dans le premier système de communication.

D'une manière générale, chaque équipement réseau auquel est associée une application CDA est de type routeur, commutateur (*switch* en anglais) ou modem.

D'un point de vue application du plan de QoS, les équipements mettant en oeuvre de telles applications CDA et l'équipement mettant en oeuvre le centre AMC sont considérés comme des équipements réseau et non comme des terminaux applicatifs. A ce titre, ils ne sont pas considérés comme des équipements gérés par la politique de QoS du domaine de communication 100. En d'autres termes, le trafic que ces équipements génèrent dans le cadre de la mise en oeuvre des fonctionnalités d'application CDA et de centre AMC, notamment pour ce qui concerne les flux de paquets de test, n'est pas impacté par la politique de QoS mise en oeuvre dans le domaine de communication 100 pour faire face à des variations de conditions de transmission. Les paquets utilisés dans les mécanismes détaillés ci-après peuvent utiliser un adressage spécifique, *e.g.* ports UDP (*User Datagram Protocol* en anglais) spécifiques, qui n'entre pas dans le plan de QoS.

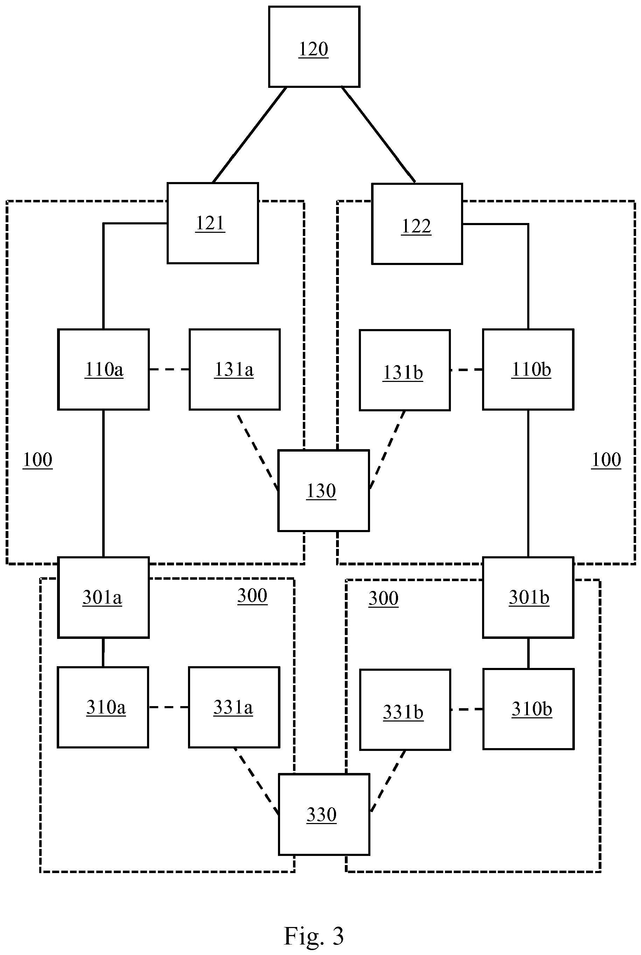

La **Fig. 2** illustre schématiquement un exemple d'architecture matérielle permettant la mise en oeuvre d'une application CDA et/ou du centre AMC 130 et/ou de la station NMS 132. Considérons par la suite que l'exemple d'architecture matérielle représentée schématiquement à la Fig. 3 correspond à une machine sur laquelle est exécutée la seconde application CDA 131b.

La machine sur laquelle est exécutée la seconde application CDA 131b inclut alors, reliés par un bus de communication 210 : un processeur ou CPU (*Central Processing Unit* en anglais) 201 ; une mémoire vive RAM (*Random Access Memory* en anglais) 202 ; une mémoire morte ROM (*Read Only Memory* en anglais) 203 ; une unité de stockage 204 ou un lecteur de support de stockage, tel qu'un lecteur de cartes SD (*Secure Digital* en anglais) ou un disque dur HDD (*Hard Disk Drive* en anglais) ; et un ensemble d'interfaces 205.

L'ensemble d'interfaces 205 permet à la machine sur laquelle est exécutée la seconde application CDA 131b de communiquer avec le second équipement réseau 110b auquel est associée la seconde application CDA 131b et avec la première application CDA 131a, ainsi qu'avec le centre AMC 130, et éventuellement avec la station NMS 132.

Le processeur 201 est capable d'exécuter des instructions chargées dans la RAM 202 à partir de la ROM 203, d'une mémoire externe, d'un support de stockage, ou d'un réseau de communication. Lorsque la machine sur laquelle est exécutée la seconde application CDA 131b est mise sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut ainsi être implémenté sous forme logicielle par exécution d'un ensemble d'instructions par une machine programmable, tel qu'un DSP (*Digital Signal Processor* en anglais) ou un microcontrôleur, ou être implémenté sous forme matérielle par une machine ou un composant dédié, tel qu'un FPGA (*Field-Programmable Gate Array* en anglais) ou un ASIC (*Application-Specific Integrated Circuit* en anglais).

La **Fig. 3** illustre schématiquement un second système de communication dans lequel la présente invention peut être mise en oeuvre. Le second système de communication est aussi un système de communication par paquets, reposant préférentiellement sur la technologie IP.

Le second système de communication est constitué d'une pluralité de domaines de communication hermétiques 100, 300. En d'autres termes, un dispositif du second système de communication appartenant à un domaine de communication ne peut pas communiquer avec un autre dispositif du second système de communication appartenant à un autre domaine de communication.

Le second système de communication de la Fig. 2 inclut le premier système de communication de la Fig. 1, la station NMS 132 n'étant cependant pas représentée sur la Fig. 2 par souci de simplification.

Le second système de communication inclut en outre un premier dispositif de chiffrement-déchiffrement 301a connecté au premier équipement réseau 110a et un second dispositif de chiffrement-déchiffrement 301b connecté au second équipement réseau 110b. Les premier 301a et second 301b dispositifs de chiffrement sont appairés et permettent de définir un autre domaine de communication 300 que le domaine de communication 100 auquel appartiennent les premier 110a et second 110b équipements réseau. Les premier 301a et second 301b dispositifs de chiffrement assurent ainsi que ces domaines de communication soient hermétiques l'un vis-à-vis de l'autre.

Le second système de communication inclut en outre un troisième équipement réseau 310a connecté au premier dispositif de chiffrement-déchiffrement 301a dans le domaine de communication 300. Le second système de communication inclut en outre un quatrième équipement réseau 310b connecté au second dispositif de chiffrement-déchiffrement 301b dans le domaine de communication 300. Des équipements terminaux connectés au troisième équipement réseau 310a, éventuellement via un ou plusieurs autres équipements réseau, peuvent ainsi communiquer avec d'autres équipements terminaux connectés au quatrième équipement réseau 310b, aussi éventuellement via un ou plusieurs autres équipements réseau. Ces équipements terminaux peuvent ainsi s'échanger des données selon différentes classes de service CoS, en bénéficiant du plan de QoS appliqué au sein du domaine de communication 300. Il convient de noter que les domaines de communication 100 et 300 étant hermétiques l'un vis-à-vis de l'autre, des plans indépendants de QoS y sont appliqués. La détection de congestion de service CoS dans le domaine de communication 300 est alors réalisée indépendamment de la détection de congestion dans le domaine de communication 100.

Pour permettre de détecter des congestions sur un lien de transmission et de détecter une amélioration des conditions de transmission sur ledit lien de transmission comme susmentionné, le second système de communication inclut en outre une troisième application CDA 331a associée au troisième équipement réseau 301a et une quatrième application CDA 331b associée au quatrième équipement réseau 301b. Comme pour les applications CDA 131a et 131b dans le domaine de communication 100, les applications CDA 331a et 331b sont appairées. Les applications CDA 331a et 331b se comportent vis-à-vis l'une de l'autre comme respectivement les applications CDA 131a et 131b.

Le second système de communication inclut en outre un centre AMC 330 au sein du domaine de communication 300. Le centre AMC 330 du domaine de communication 300 agit vis-à-vis des applications CDA 331a et 331b de la même manière que le centre AMC 130 vis-à-vis des applications CDA 131a et 131b dans le domaine de communication 100.

Il convient de noter qu'un plus grand nombre de domaines de communication peut être mis en oeuvre dans le second système de communication, chaque domaine de communication disposant alors d'une pluralité d'applications CDA et d'un centre AMC afin de détecter des congestions et de réagir auxdites congestions.

Lorsque plusieurs domaines de communication sont présents dans un même système de communication, chacun de ces domaines de communication peut mettre en oeuvre une station NMS n'intervenant que sur le domaine de communication auquel ladite station NMS appartient.

Pour pouvoir détecter une congestion sur un lien de transmission depuis un premier équipement réseau vers un second équipement réseau, que ce soit dans le cadre du premier système de communication de la Fig. 1 ou dans le cadre du second système de communication de la Fig. 2, l'application CDA associée au premier équipement réseau transmet à l'application CDA associée au second équipement réseau des messages de contrôle représentatifs d'un volume de données transmises par ledit premier équipement réseau.

La Fig. 4 illustre schématiquement un format de tels messages de contrôle.

Le message de contrôle représenté schématiquement à la Fig. 4 est une trame comportant un en-tête 401 de niveau trois (couche réseau, *network layer* en anglais) dans le modèle OSI et un corps de message (*payload* en anglais) 402. Plus particulièrement, dans le cadre de la Fig. 4, la trame est de type IP. L'en-tête de message 401 inclut alors des informations d'adresse IP source, d'adresse IP destination permettant de router le message de contrôle dans un réseau de communication par paquets. L'en-tête 401 inclut notamment un champ 411, appelé ToS (*Type of Service* en anglais), destiné à préciser un identifiant de classe de service CoS à laquelle est associée ledit message de contrôle. Cet identifiant de classe de service est par exemple un code DSCP.

Comme détaillé par la suite, pour détecter une congestion sur un lien de transmission vis-à-vis d'une classe de service CoS considérée, une application CDA transmet un message de contrôle à l'application CDA qui lui est appairée pour surveiller ledit lien de transmission, ledit message de contrôle étant transmis dans la classe de service CoS considérée. Le champ 411 est alors rempli avec l'identifiant de la classe de service CoS considérée. Dans le cas d'un message de contrôle général, un identifiant de classe de service CoS la plus prioritaire est utilisé dans le champ 411. En reprenant l'exemple DSCP susmentionné, le code de classe de service CS7 est utilisé.

Le corps du message 402 inclut un champ de séquence 421 servant à indiquer un numéro de séquence. A chaque nouvel envoi d'un message de contrôle pour une classe de service CoS considérée, l'application CDA générant ledit message incrémente d'une unité la valeur d'un compteur de séquence, cette valeur étant ensuite indiquée dans le champ de séquence 421.

Le corps du message 402 inclut en outre un champ de classe de service CoS 422. Ce champ reprend la valeur du champ 411 de l'en-tête 401. En effet, l'en-tête 401 étant un en-tête de routage, l'en-tête 401 est destiné à être effacé par le niveau trois (couche réseau, *network layer* en anglais) du modèle OSI. Le champ 421 permet donc à l'application CDA, située au niveau sept (couche application) du modèle OSI, de recevoir l'information de classe de service CoS à laquelle est associé le message de contrôle. Dans le cas d'un message de contrôle général, un identifiant spécifique GS (*Global Selector* en anglais) est utilisé pour indiquer que ledit message est un message de contrôle général.

Le corps du message 402 inclut en outre un champ de valeur 423. Le champ de valeur est destiné à indiquer une information de volume de données transmises par l'équipement réseau auquel est associée l'application CDA ayant généré le message de contrôle.

Les messages de contrôle sont préférentiellement conformes au protocole UDP. Un en-tête relatif au protocole UDP est alors intercalé entre l'en-tête 401 et le corps du message 402. D'autres en-têtes peuvent être intercalés entre l'en-tête 401 et le corps du message 402.

Le corps du message 402 peut inclure d'autres informations. Par exemple, le corps du message 402 peut inclure un champ de type de message permettant d'indiquer que ledit message est un message de contrôle. Cela permet d'utiliser le même format pour différents types de message ; des paquets de flux de test, tels que détaillés ci-après en relation avec les Figs. 10 à 13, peuvent alors utiliser un format similaire. Cela peut aussi permettre, pour une séquence de dits paquets de test, de marquer une différence entre un paquet de test de début de séquence, un paquet de test de fin de séquence et un paquet de test intermédiaire.

Le format de messages de contrôle de la Fig. 4 est basé sur un format d'en-tête de type IPv4, tel que défini dans le document normatif RFC 791. Le format de messages de contrôle peut aussi être basé sur un format d'en-tête de type IPv6, tel que défini dans le document normatif RFC 2460. La classe de service CoS est alors précisée dans un champ, appelé *Traffic Class* dans l'en-tête au format IPv6.

La **Fig. 5** illustre schématiquement un algorithme de transmission d'informations relatives à un volume de données transmises par classe de service via un lien de transmission à surveiller. Considérons que l'algorithme de la Fig. 5 est mis en oeuvre par la première application CDA 131a qui est appairée avec la seconde application CDA 131b pour surveiller le lien de transmission depuis le premier équipement réseau 110a jusqu'au second équipement réseau 110b.

Dans une étape S501, la première application CDA 131a reçoit un ordre d'activation d'un mécanisme de contrôle de congestion pour une ou plusieurs classes de service CoS identifiées explicitement ou implicitement par l'ordre d'activation. La première application CDA 131a active alors le mécanisme de contrôle de congestion pour chaque classe de service CoS identifiée par l'ordre d'activation. L'ordre d'activation est transmis à la première application CDA 131a par le centre AMC 130.

Dans une étape S502 suivante, la première application CDA 131a obtient auprès du premier équipement réseau 110a une information représentative d'un volume de données transmises, depuis un instant T₀ qui correspond typiquement à un instant d'initialisation du premier équipement réseau 110a, par le premier équipement réseau 110a via le lien de transmission à surveiller pour chaque classe de service CoS identifiée par l'ordre d'activation.

Dans une étape S503 suivante, la première application CDA 131a transmet à la seconde application CDA 131b un message de contrôle pour chaque classe de service CoS identifiée par l'ordre d'activation. En reprenant le format de la Fig. 4, pour chaque classe de service CoS, les champs 411 et 422 sont remplis avec un identifiant correspondant à ladite classe de service CoS. Chaque message de contrôle sert à détecter d'éventuelles congestions pour une classe de service CoS considérée. Chaque message de contrôle va alors subir les mêmes conditions de transmission via le lien de transmission à surveiller que les paquets qui sont de ladite classe de service CoS considérée.

Dans une étape S504 suivante, la première application CDA 131a vérifie si une condition d'arrêt est remplie. En d'autres termes, la première application CDA 131a vérifie si un ordre de désactivation du mécanisme de contrôle de congestion a été reçu de la part du centre AMC 130. Si tel est le cas, une étape S506 est effectuée ; sinon, une étape S505 est effectuée.

Dans l'étape S505, la première application CDA 131a attend qu'un délai prédéfini soit expiré et réitère l'étape S502. Par exemple, ledit délai prédéfini est fixé à cinq secondes.

Dans l'étape S506, la première application CDA 131a désactive le mécanisme de contrôle de congestion pour chaque classe de service CoS identifiée dans l'ordre d'activation auquel il est fait référence à l'étape S501.

Dans une variante de réalisation, l'ordre de désactivation peut ne concerner qu'un nombre limité de classes de service CoS parmi les classes de service CoS pour lesquelles le mécanisme de contrôle de congestion a été préalablement activé. Dans ce cas, la première application CDA 131a désactive le mécanisme de contrôle de congestion pour chaque classe de service CoS identifiée explicitement dans l'ordre de désactivation, et répète l'étape S502 pour les classes de service CoS restantes.

La **Fig. 6** illustre schématiquement un algorithme de détection de congestion par classe de service à partir d'informations relatives au volume de données transmises via le lien de transmission à surveiller. L'algorithme de la Fig. 6 est exécuté en conjonction avec l'algorithme de la Fig. 5. Plus précisément, l'algorithme de la Fig. 6 est exécuté par l'application CDA appairée avec l'application CDA exécutant l'algorithme de la Fig. 5. Considérons que l'algorithme de la Fig. 6 est mis en oeuvre par la seconde application CDA 131b qui est appairée avec la première application CDA 131a pour surveiller le lien de transmission depuis le premier équipement réseau 110a jusqu'au second équipement réseau 110b.

Dans une étape S601, la seconde application CDA 131b initialise une valeur de compteur C à « 0 ». Ce compteur est utilisé pour permettre à la seconde application CDA 131b d'éviter d'envoyer de fausses alarmes (*false positives* en anglais) au centre AMC 130 par mise en oeuvre d'une fenêtre glissante.

Dans une étape S602 suivante, la seconde application CDA 131b reçoit un message de contrôle associé à une classe de service CoS. Ce message correspond à un message envoyé par la première application CDA 131a à l'étape S503.

Dans une étape S603 suivante, la seconde application CDA 131b obtient, à partir du message de contrôle reçu à l'étape S602, une information représentative d'un volume de données transmises par le premier équipement réseau 110a associé à la première application CDA 131a sur le lien de transmission à surveiller pour ladite classe de service CoS. Ladite information représentative d'un volume de données transmises est associée à un numéro de séquence S.

Dans une étape S604 suivante, la seconde application CDA 131b détermine un premier écart de volume de données qui correspond à la différence entre le volume de données transmises tel qu'indiqué dans le message de contrôle de séquence S pour ladite classe de service CoS et le volume de données transmises tel qu'indiqué dans un message de contrôle précédent pour ladite classe de service CoS. Préférentiellement, ledit message de contrôle précédent a un numéro de séquence S-1 pour ladite classe de service CoS.

Dans une étape S605 suivante, la première application CDA 131a obtient auprès du second équipement réseau 110b une information représentative d'un volume de données reçues, depuis un instant T'₀ qui correspond typiquement à un instant d'initialisation du second équipement réseau 110b, par le second équipement réseau 110b via le lien de transmission à surveiller pour ladite classe de service CoS. Préférentiellement, la seconde application CDA 131b requiert cette information auprès du second équipement réseau 110b dès que possible après réception dudit message de contrôle.

Dans une étape S606 suivante, la seconde application CDA 131b détermine un second écart de volume de données qui correspond à la différence entre le volume de données reçues tel qu'obtenu suite au message de contrôle de séquence S pour ladite classe de service CoS et le volume de données transmises tel qu'obtenu suite audit message de contrôle précédent pour ladite classe de service CoS.

Dans une étape S607 suivante, la seconde application CDA 131b détermine une différence absolue D entre le premier écart déterminé à l'étape S604 et le second écart déterminé à l'étape S606. Une telle approche basée sur des écarts de volumes transmis et reçus permet d'éviter d'avoir à synchroniser temporellement les actions réalisées par les applications CDA 131a et 131b dans le cadre de la détection de congestion. En effet, lorsqu'aucune congestion ne survient, le second équipement réseau 110b est supposé indiquer avoir reçu plus de données que le premier équipement réseau 110a a indiqué avoir transmises, puisque le premier équipement réseau 110a continue d'envoyer *a priori* des données le temps que la première application CDA 131a transmette le message de contrôle à la seconde application CDA 131b et que la seconde application CDA 131b obtienne du second équipement réseau 110b les informations de volume de données reçues.

Dans une étape S608 suivante, la seconde application CDA 131b compare la différence D avec un premier seuil prédéfini T. Le premier seuil prédéfini T est fixé de telle sorte à compenser un asynchronisme entre les applications CDA 131a et 131b. En effet, il n'est pas nécessaire que les applications CDA 131a et 131b soient synchronisées temporellement, et la gigue dans les échanges entre les applications CDA 131a et 131b et les équipements réseaux 110a et 110b qui sont associées auxdites applications CDA 131a et 131b doivent être prises en compte.

Lorsque la différence D est supérieure ou égale au premier seuil prédéfini T, la seconde application CDA 131b considère qu'une situation de congestion est rencontrée pour ladite classe de service CoS sur le lien de transmission à surveiller, et une étape S609 est effectuée ; sinon, cela signifie qu'une situation de congestion éventuellement détectée à la réception du message de contrôle de séquence S-1 est une fausse alarme et l'étape S601 est réitérée avec une remise à zéro de la valeur de compteur C.

Dans l'étape S609, la seconde application CDA 131b incrémente la valeur du compteur C d'une unité.

Dans une étape S610 suivante, la seconde application CDA 131b compare la valeur du compteur C avec le nombre entier positif N prédéfini. Lorsque la valeur du compteur C est supérieure ou égale au nombre entier positif N prédéfini, cela signifie que la congestion sur le lien de transmission à surveiller pour ladite classe de service CoS est avérée, et une étape S611 est effectuée ; sinon, la seconde application CDA 131b se remet en attente d'un nouveau message de contrôle pour ladite classe de service CoS et réitère l'étape S602.

Dans l'étape S611, la seconde application CDA 131b génère un signal d'alarme. En d'autres termes, la seconde application CDA 131b transmet au centre AMC 130 un message représentatif d'un déclenchement d'alarme de congestion sur le lien de transmission à surveiller pour ladite classe de service CoS. Puis, l'étape S601 est réitérée.

Dans un mode de réalisation particulier, un tel signal d'alarme comporte une information représentative d'une différence moyenne de volume de données transmises et reçues, pour chaque classe de service CoS concernée, sur une fenêtre glissante de taille égale à N. Préférentiellement, cette information est une estimation de taux de perte de paquet sur ladite fenêtre glissante.

Dans un mode de réalisation particulier, la seconde application CDA 131b transmet toutefois toute alarme détectée au centre AMC 130 qui se charge alors de filtrer les fausses alarmes en considérant qu'une situation de congestion est rencontrée pour une classe de service CoS considérée lorsqu'un signal d'alarme est reçu de la seconde application CDA 131b pour un nombre entier positif N prédéfini de séquences successives de messages de contrôle pour ladite classe de service CoS considérée. Ainsi, d'une manière générale, N ≥ 1, et définir N > 1 permet de s'appuyer sur ladite fenêtre glissante pour filtrer les fausses alarmes.

Il convient de noter que chaque message de contrôle est associé à une classe de service CoS et que ce message de contrôle subit les mêmes conditions de transmission via ledit lien de transmission à surveiller que n'importe quel paquet qui est transmis via ledit lien de transmission à surveiller et qui est coloré par ladite classe de service CoS. Cela permet d'avoir, à partir des écarts de volume déterminés, une bonne estimation des conditions de transmission via ledit lien de transmission à surveiller pour la classe de service CoS considérée. De plus, avoir une approche par classe de service CoS permet de détecter des situations où seules certaines classes de service CoS subissent des situations de congestion via ledit lien de transmission à surveiller, à cause de la gestion de priorité intrinsèque à l'application du plan de QoS.

La Fig. 6 représente schématiquement un mode de réalisation dans lequel la situation de congestion est confirmée N fois avant de générer un signal d'alarme à destination du centre AMC 130. En variante préférentielle, la seconde application CDA 131b peut générer une alarme si en moyenne sur la fenêtre glissante de taille N la différence entre volumes de données transmises et reçues est supérieure au premier seuil prédéfini T.

Même si des messages de contrôle sont perdus sur le lien de transmission à surveiller, cela n'empêche pas la seconde application CDA 131b d'effectuer le contrôle de la différence de volumes de données transmises et reçues. En effet, la fenêtre glissante peut être définie en termes de nombre de séquences à prendre en compte, que lesdites séquences aient des numéros consécutifs ou pas. Dans un mode de réalisation particulier, si la différence entre le numéro de séquence indiqué dans un message de contrôle reçu pour une classe de service CoS considérée et le numéro de séquence indiqué dans le dernier message de contrôle précédemment reçu pour ladite classe de service CoS considérée est supérieure à un seuil prédéfini, la seconde application CDA 131b génère un signal d'alarme spécifique à destination du centre AMC 130.

Le mécanisme de contrôle de congestion précédemment décrit s'appuie sur une approche par classe de service CoS. Il peut cependant être utile d'avoir une surveillance générale dudit lien de transmission. En effet, toutes les classes de service CoS pour lesquelles les applications CDA appairées surveillent ledit lien de transmission peuvent simultanément subir des situations de congestion et il peut être souhaitable de s'assurer que ledit lien de transmission est encore actif. Ainsi, dans un mode de réalisation particulier, des messages de contrôle général sont alors transmis par la première application CDA 131a à destination de la seconde application CDA 131b, comme décrit ci-après en relation avec les Figs. 7 et 8.

La **Fig. 7** illustre schématiquement un algorithme de transmission d'informations relatives à un volume global de données transmises via un lien de transmission à surveiller. Considérons que l'algorithme de la Fig. 7 est mis en oeuvre par la première application CDA 131a qui est appairée avec la seconde application CDA 131b pour surveiller le lien de transmission depuis le premier équipement réseau 110a jusqu'au second équipement réseau 110b.

Dans une étape S701, la première application CDA 131a reçoit un ordre d'activation d'un mécanisme de contrôle de congestion globale dudit lien de transmission à surveiller. La première application CDA 131a active alors le mécanisme de contrôle de congestion globale. L'ordre d'activation est transmis à la première application CDA 131a par le centre AMC 130.

Dans une étape S702 suivante, la première application CDA 131a obtient auprès du premier équipement réseau 110a une information représentative d'un volume de données transmises depuis l'instant T₀ par le premier équipement réseau 110a via le lien de transmission à surveiller, indépendamment des classes de service CoS associées à ces données.

Dans une étape S703 suivante, la première application CDA 131a transmet à la seconde application CDA 131b un message de contrôle général. En reprenant le format de la Fig. 4, le champ 411 est rempli avec un identifiant correspondant à la classe de service CoS de plus forte priorité de manière à assurer la transmission, à un moment ou à un autre, dudit message de contrôle général si ledit lien de transmission à surveiller est toujours actif. Le champ 422 est rempli avec l'identifiant spécifique GS déjà mentionné.

Dans une étape S704 suivante, la première application CDA 131a vérifie si une condition d'arrêt est remplie. En d'autres termes, la première application CDA 131a vérifie si un ordre de désactivation du mécanisme de contrôle de congestion globale a été reçu de la part du centre AMC 130. Si tel est le cas, une étape S706 est effectuée ; sinon, une étape S705 est effectuée.

Dans l'étape S705, la première application CDA 131a attend qu'un délai prédéfini soit expiré et réitère l'étape S702. Par exemple, ledit délai prédéfini est fixé à cinq secondes.

Dans l'étape S706, la première application CDA 131a désactive le mécanisme de contrôle de congestion globale.

La **Fig. 8** illustre schématiquement un algorithme de détection de congestion globale d'un lien de transmission à partir d'informations relatives au volume global de données transmises via ledit lien de transmission. L'algorithme de la Fig. 8 est exécuté en conjonction avec l'algorithme de la Fig. 7. Plus précisément, l'algorithme de la Fig. 8 est exécuté par l'application CDA appairée avec l'application CDA exécutant l'algorithme de la Fig. 7. Considérons que l'algorithme de la Fig. 8 est mis en oeuvre par la seconde application CDA 131b qui est appairée avec la première application CDA 131a pour surveiller le lien de transmission depuis le premier équipement réseau 110a jusqu'au second équipement réseau 110b.

Dans une étape S801, la seconde application CDA 131b reçoit un message de contrôle général. Ce message correspond au message envoyé par la première application CDA 131a à l'étape S703.

Dans une étape S802 suivante, la seconde application CDA 131b obtient, à partir du message de contrôle général reçu à l'étape S801, une information représentative d'un volume de données transmises par le premier équipement réseau 110a associé à la première application CDA 131a sur le lien de transmission à surveiller, indépendamment de toute classe de service CoS. Ladite information représentative d'un volume de données transmises est associée à un numéro de séquence S.

Dans une étape S803 suivante, la seconde application CDA 131b détermine un troisième écart de volume de données qui correspond à la différence entre le volume de données transmises tel qu'indiqué dans le message de contrôle général de séquence S et le volume de données transmises tel qu'indiqué dans un message de contrôle général précédent. Préférentiellement, ledit message de contrôle général précédent a un numéro de séquence S-1.

Dans une étape S804 suivante, la seconde application CDA 131b obtient auprès du second équipement réseau 110b une information représentative d'un volume de données reçues depuis l'instant T'₀ par le second équipement réseau 110b via le lien de transmission à surveiller, indépendamment de toute classe de service CoS. Préférentiellement, la seconde application CDA 131b requiert cette information auprès du second équipement réseau 110b dès que possible après réception dudit message de contrôle général.

Dans une étape S805 suivante, la seconde application CDA 131b détermine un quatrième écart de volume de données qui correspond à la différence entre le volume de données reçues tel qu'obtenu suite au message de contrôle général de séquence S et le volume de données transmises tel qu'obtenu suite audit message de contrôle général.

Dans une étape S806 suivante, la seconde application CDA 131b détermine une différence absolue Dt entre le troisième écart déterminé à l'étape S803 et le quatrième écart déterminé à l'étape S805. Comme déjà mentionné, une telle approche basée sur des écarts de volumes transmis et reçus permet d'éviter d'avoir à synchroniser temporellement les actions réalisées par les applications CDA 131a et 131b dans le cadre de la détection de congestion.

Dans une étape S807 suivante, la seconde application CDA 131b compare la différence Dt avec un second seuil prédéfini Tt. Le second seuil prédéfini Tt est fixé de telle sorte à compenser l'asynchronisme entre les applications CDA 131a et 131b. Lorsque la différence Dt est supérieure ou égale au second seuil prédéfini Tt, la seconde application CDA 131b considère qu'une situation de congestion est rencontrée pour l'ensemble du lien de transmission à surveiller, et une étape S808 est effectuée ; sinon, cela signifie qu'une situation de congestion n'est rencontrée que pour les classes de service CoS de plus basse priorité, et la seconde application CDA 131b se remet en attente d'un message de contrôle général dans l'étape S801.

Dans l'étape S808, la seconde application CDA 131b génère un signal d'alarme. En d'autres termes, la seconde application CDA 131b transmet au centre AMC 130 un message représentatif d'un déclenchement d'alarme de congestion globale sur le lien de transmission à surveiller. Puis, l'étape S801 est réitérée.

Il convient de noter que, contrairement à l'algorithme de la Fig. 6, l'algorithme de la Fig. 8 ne décrit pas, par souci de simplification, de fenêtre glissante destinée à éviter des déclenchements de fausses alarmes. Ce principe de fenêtre glissante peut toutefois être aussi appliqué dans le cadre de l'algorithme de la Fig. 8 de sorte que la seconde application CDA 131b génère le signal d'alarme lorsqu'un nombre entier positif N' prédéfini de séquences successives de messages de contrôle général montre une congestion globale du lien de transmission à surveiller. Ainsi, d'une manière générale, N' ≥ 1, et définir N' > 1 permet de s'appuyer sur ladite fenêtre glissante pour filtrer les fausses alarmes. Comme dans le cadre de l'algorithme de la Fig. 6, une telle fenêtre glissante peut être mise en oeuvre par le centre AMC 130.

Le mécanisme de détection de congestion globale précédemment décrit en relation avec les Figs. 7 et 8 est préférentiellement mis en oeuvre à substantiellement la même fréquence que le mécanisme de détection de congestion par classe de service CoS décrit en relation avec les Figs. 5 et 6. En d'autres termes, les délais appliqués aux étapes S505 et S705 sont substantiellement de même valeur.

L'algorithme de la Fig. 8 est déclenché sur ordre du centre AMC 130, tel que décrit ci-après en relation avec la Fig. 9.

La **Fig. 9** illustre schématiquement un algorithme de détection de rupture d'un lien de transmission. L'algorithme de la Fig. 9 est mis en oeuvre par la même application CDA que l'algorithme de la Fig. 8. Considérons que l'algorithme de la Fig. 8 est mis en oeuvre par la seconde application CDA 131b.

Dans une étape S901, la seconde application CDA 131b reçoit, en provenance du centre AMC 130, un ordre d'activation du mécanisme de contrôle de congestion globale du lien de transmission à surveiller.

Dans une étape S902 suivante, la seconde application CDA 131b active le mécanisme de contrôle de congestion globale, ce qui a pour effet de déclencher la mise en oeuvre de l'algorithme de la Fig. 8. La seconde application CDA 131b initialise alors une temporisation de durée prédéfinie. Ladite temporisation est réinitialisée à chaque fois qu'un message de contrôle général est reçu par la seconde application CDA 131b pour ledit lien de transmission à surveiller. La durée de ladite temporisation est fixée de sorte à être très nettement supérieure au délai appliqué par la première application CDA 131a à l'étape S705.

Dans une étape S903 suivante, la seconde application CDA 131b vérifie si ladite temporisation est écoulée. Si tel est le cas, une étape S904 est effectuée ; sinon, une étape S905 est effectuée.

Dans l'étape S904, la seconde application CDA 131b considère que le lien de transmission à surveiller est rompu, car aucun message de contrôle général n'a été reçu pour ledit lien de transmission à surveiller avant que ladite temporisation ne soit écoulée. La seconde application CDA 131b génère alors un signal d'alarme spécifique pour indiquer que le lien de transmission à surveiller est rompu. En d'autres termes, la seconde application CDA 131b transmet au centre AMC 130 un message représentatif d'un déclenchement d'alarme de rupture du lien de transmission à surveiller. Puis, l'étape S905 est effectuée.

Dans l'étape S905, la seconde application CDA 131b vérifie si une condition d'arrêt est remplie. En d'autres termes, la seconde application CDA 131b vérifie si un ordre de désactivation du mécanisme de contrôle de congestion globale a été reçu de la part du centre AMC 130. Si tel est le cas, une étape S906 est effectuée ; sinon, l'étape S903 est réitérée.

Dans l'étape S906, la seconde application CDA 131b désactive le mécanisme de contrôle de congestion globale, ce qui met fin à la mise en oeuvre de l'algorithme de la Fig. 8.

Dans une variante de réalisation, l'algorithme de la Fig. 8 est actif en permanence au niveau de l'application CDA 131b. L'algorithme de la Fig. 8 réagit alors sur réception de message de contrôle général. L'algorithme de la Fig. 9 est alors simplifié en ce que la seconde application CDA 131b initialise et active ladite temporisation sur ordre du centre AMC 130.

Les algorithmes des Figs. 5 à 9 permettent de détecter des situations de congestion. Comme déjà mentionné, il est attendu en conséquence que le centre AMC 130 fasse appliquer un nouveau plan de QoS adapté aux conditions de transmission qui ont mené à ces situations de congestion. Après application de ce nouveau plan de QoS, il est attendu que de telles situations de congestion ne soient plus rencontrées si les conditions de transmission n'évoluent pas. Si ces conditions de transmission se dégradent à nouveau, les algorithmes des Figs. 5 à 9 permettent de détecter de nouvelles situations de congestion liées à cette dégradation des conditions de transmission. Les algorithmes des Figs. 5 à 9 ne permettent toutefois pas de détecter si ces conditions de transmission se sont améliorées. Un mécanisme de contrôle d'amélioration de conditions de transmission est alors préférentiellement mis en oeuvre pour permettre de détecter une amélioration des conditions de transmission. Le mécanisme de contrôle d'amélioration de conditions de transmission est préférentiellement déclenché pour une classe service CoS considérée lorsque le centre AMC 130 observe qu'aucune alarme de congestion ou qu'une quantité inférieure à un seuil prédéfinie d'alarmes de congestion est reçue pour ladite classe service CoS pendant une période de durée prédéfinie, après s'être assuré que le lien de transmission à surveiller n'était pas rompu.

Un premier mode de réalisation du mécanisme de contrôle d'amélioration de conditions de transmission est présenté ci-après en relation avec les Figs. 10 et 11, et un second mode de réalisation du mécanisme de contrôle d'amélioration de conditions de transmission est présenté ci-après en relation avec les Figs. 12 et 13.

La **Fig. 10** illustre schématiquement un premier algorithme de transmission d'un flux de données de test via un lien de transmission à surveiller. Considérons que l'algorithme de la Fig. 10 est mis en oeuvre par la première application CDA 131a qui est appairée avec la seconde application CDA 131b pour surveiller le lien de transmission depuis le premier équipement réseau 110a jusqu'au second équipement réseau 110b.

Dans une étape S1001, la première application CDA 131a reçoit un ordre d'activation d'un mécanisme de contrôle d'amélioration de conditions de transmission du lien de transmission à surveiller, pour une ou plusieurs classes de service CoS identifiées explicitement ou implicitement par l'ordre d'activation. La première application CDA 131a active alors le mécanisme de contrôle d'amélioration de conditions de transmission pour chaque classe de service CoS identifiée. L'ordre d'activation est transmis à la première application CDA 131a par le centre AMC 130.

Dans une étape S1002 suivante, la première application CDA 131a désactive le mécanisme de contrôle de congestion décrit précédemment en relation avec les Figs. 5 et 7. Cela évite que le mécanisme de contrôle d'amélioration de conditions de transmission ne vienne générer inutilement des alarmes de congestion qui ne seraient pas représentatives des conditions effectives de transmission sur le lien de transmission à surveiller.

Ensuite, la première application CDA 131a crée et transmet un flux de paquets de test pour chaque classe de service CoS identifiée. Pour une classe de service CoS considérée, la première application CDA 131a crée un flux de paquets de test coloré selon la classe de service CoS considérée. La taille des paquets dudit flux et la quantité de ces paquets sont prédéfinies en fonction de la classe de service CoS considérée, en fonction des conditions de transmission sur ledit de transmission qui ont conduit au plan de QoS actuellement appliqué et en fonction d'une charge nominale voulue pour la classe de service CoS considérée sur ledit lien de transmission.

Le centre AMC 130 fournit préférentiellement, dans l'ordre d'activation reçu par la première application CDA 131a à l'étape S1001, une information de débit à respecter dans le cadre de la transmission de chaque flux. Soit le nombre de paquets de la séquence est prédéfini et connu de la première application CDA 131a, soit ce nombre de paquets est aussi fourni par le centre AMC dans l'ordre d'activation. En variante, des informations de taille des paquets dudit flux et de quantité de ces paquets sont fournies par le centre AMC 130 dans l'ordre d'activation reçu par la première application CDA 131a à l'étape S1001.

Le but visé est alors d'augmenter la charge du lien de transmission pour la classe de service CoS considérée afin d'évaluer un taux de perte pour ledit flux, de manière à ensuite permettre au centre AMC 130 de déterminer si les conditions de transmission sur ledit lien de transmission pour la classe de service CoS considérée se sont améliorées.

Dans une étape S1003 suivante, la première application CDA 131a obtient auprès du premier équipement réseau 110a une information représentative d'un premier volume de données transmises, depuis l'instant T₀ par le premier équipement réseau 110a via le lien de transmission à surveiller pour chaque classe de service CoS.

Dans une étape S1004 suivante, la première application CDA 131a crée et transmet à la seconde application CDA 131b le premier paquet de chaque flux de paquets de test. Le premier paquet de chaque flux est donc un paquet de démarrage de la séquence de test correspondante. Chaque premier paquet comporte l'information représentative du premier volume de données pour la classe de service CoS concernée.

Dans une étape S1005 suivante, la première application CDA 131a crée et transmet à la seconde application CDA 131b des paquets intermédiaires de chaque flux de paquets de test. Ces paquets sont dits « intermédiaires » en ce que lesdits paquets ne sont ni des paquets de démarrage de séquence de test, ni de terminaison de séquence de test.

Dans une étape S1006 suivante, la première application CDA 131a obtient auprès du premier équipement réseau 110a une information représentative d'un second volume de données transmises, depuis l'instant T₀ par le premier équipement réseau 110a via le lien de transmission à surveiller pour chaque classe de service CoS.

Dans une étape S1007 suivante, la première application CDA 131a crée et transmet à la seconde application CDA 131b le dernier paquet de chaque flux de paquets de test. Le dernier paquet de chaque flux est donc un paquet de terminaison de la séquence de test correspondante. Chaque dernier paquet comporte l'information représentative du second volume de données pour la classe de service CoS concernée.

Les paquets de chacun de ces flux sont ensuite remplis par des données de bourrage (*padding data* en anglais) pour atteindre les tailles voulues. Les paquets de chacun de ces flux sont préférentiellement conformes au protocole UDP. Le corps de ces paquets inclut une information représentative de la classe de service CoS, afin de permettre à la seconde application CDA 131b de déterminer à quelle classe de service CoS sont associés lesdits paquets, comme le sont les messages de contrôle déjà décrits en relation avec la Fig. 4. Le corps de ces paquets inclut aussi une information de numéro de séquence permettant à la seconde application CDA 131b, lorsque ladite application CDA 131b reçoit un tel paquet, de déterminer quelle est la position dudit paquet dans ledit flux.

Dans un mode de réalisation préférentiel, le premier paquet dudit flux est répété un nombre N₀ > 1 de fois, afin d'assurer que la seconde application CDA 131b reçoive au moins une copie dudit premier paquet. Plusieurs paquets de test successifs comportent alors le même numéro de séquence.

Dans un mode de réalisation préférentiel, le dernier paquet dudit flux est répété un nombre N₁ > 1 de fois, afin d'assurer que la seconde application CDA 131b reçoive au moins une copie dudit dernier paquet. Dans ce cas aussi, plusieurs paquets de test successifs comportent alors le même numéro de séquence.

Pour permettre à la seconde application CDA 131b de distinguer le premier paquet du flux de test, la première application CDA 131a peut s'appuyer sur un champ de type de paquet précisé dans le corps de chaque paquet dudit flux. Une valeur représentative d'un paquet de démarrage de séquence de test, une valeur représentative d'un paquet de terminaison de séquence de test et une valeur représentative d'un paquet intermédiaire de séquence de test peuvent ainsi être définies. En variante, la première application CDA 131a peut utiliser un numéro de séquence particulier pour débuter la séquence de test, e.g. numéro de séquence nul. En connaissant préalablement la quantité de paquets de la séquence de test, la seconde application CDA 131b est alors capable de déterminer quel doit être le numéro de séquence du dernier paquet dudit flux.

Si la seconde application CDA 131b reçoit plusieurs paquets de test avec la même séquence, ladite application CDA 131b se base sur la première copie reçue pour effectuer des calculs de taux de perte.

Une fois chacun des flux de paquets de test transmis, la première application CDA 131a réactive dans une étape S1008 le mécanisme de contrôle de congestion décrit précédemment en relation avec les Figs. 5 et 7 et désactive dans une étape S1009 le mécanisme de contrôle d'amélioration de conditions de transmission pour le ledit lien de transmission à surveiller.

La **Fig. 11** illustre schématiquement un premier algorithme de détection d'amélioration de conditions de transmission par classe de service CoS sur un lien de transmission à surveiller, à partir d'informations relatives au flux de données de test. L'algorithme de la Fig. 11 est mis en oeuvre en conjonction avec l'algorithme de la Fig. 10. L'algorithme de la Fig. 11 est mis en oeuvre pour chaque classe de service CoS concernée par l'algorithme de la Fig. 10. Considérons que l'algorithme de la Fig. 11 est mis en oeuvre par la seconde application CDA 131b qui est appairée avec la première application CDA 131a pour surveiller le lien de transmission depuis le premier équipement réseau 110a jusqu'au second équipement réseau 110b.

Dans une étape S1101, la seconde application CDA 131b reçoit un ordre d'activation du mécanisme de contrôle d'amélioration de conditions de transmission du lien de transmission à surveiller, pour une classe de service CoS identifiée explicitement ou implicitement par l'ordre d'activation. La seconde application CDA 131b active alors le mécanisme de contrôle d'amélioration de conditions de transmission pour ladite classe de service CoS. L'ordre d'activation est transmis à la seconde application CDA 131b par le centre AMC 130.

Le centre AMC 130 fournit préférentiellement, dans l'ordre d'activation reçu par la seconde application CDA 131b à l'étape S1101, une information de débit que la première application CDA 131a va respecter dans le cadre de la transmission du flux de paquets de test correspondant. Soit le nombre de paquets de la séquence est prédéfini et connu de la seconde application CDA 131b, soit ce nombre de paquets est aussi fourni par le centre AMC dans l'ordre d'activation. En variante, des informations de taille des paquets dudit flux et de quantité de ces paquets sont fournies par le centre AMC 130 dans l'ordre d'activation reçu par la seconde application CDA 131b à l'étape S1101.

La seconde application CDA 131b initialise alors, pour la classe de service CoS considérée, une temporisation de durée prédéfinie nettement supérieure au temps de transfert d'un paquet dudit flux depuis la première application CDA 131a jusqu'à la seconde application CDA 131b. L'objectif de cette temporisation est de détecter des situations de congestion dans lesquelles aucune copie du premier paquet dudit flux n'est reçue.

Dans une étape S1102 suivante, la seconde application CDA 131b vérifie si la temporisation est écoulée. Si tel est le cas, une étape S1112 est effectuée ; sinon, une étape S1103 est effectuée.

Dans l'étape S1103, la seconde application CDA 131b détermine si une copie du premier paquet dudit flux est reçue. Comme déjà indiqué, ce premier paquet peut être identifié grâce à un champ de type ou grâce à un numéro de séquence prédéfini. Lorsqu'une copie du premier paquet dudit flux est reçue, une étape S1104 est effectuée ; sinon, l'étape S1102 est réitérée.

Dans l'étape S1104, la seconde application CDA 131b obtient auprès du second équipement réseau 110b une information représentative d'un premier volume de données reçues depuis l'instant T'₀ par le second équipement réseau 110b via le lien de transmission à surveiller, pour la classe de service CoS considérée. Préférentiellement, la seconde application CDA 131b requiert cette information auprès du second équipement réseau 110b dès que possible après réception de ladite copie du premier paquet du flux de test.

La seconde application CDA 131b réinitialise la temporisation avec une durée prédéfinie nettement supérieure au temps de transfert dudit flux de paquets de test depuis la première application CDA 131a jusqu'à la seconde application CDA 131b.

Dans une étape S1105 suivante, la seconde application CDA 131b se met en attente de nouveaux paquets dudit flux. Les paquets intermédiaires du flux de données sont jetés par la seconde application CDA 131b ; seul le paquet de terminaison de séquence (*i.e.* une copie du dernier paquet dudit flux) n'intéresse ici la seconde application CDA 131b.

Dans une étape S1106 suivante, la seconde application CDA 131b vérifie si la temporisation est écoulée. Si tel est le cas, l'étape S1112 est effectuée ; sinon, une étape S1107 est effectuée.

Dans l'étape S1107, la seconde application CDA 131b détermine si une copie du dernier paquet dudit flux est reçue. Comme déjà indiqué, ce dernier paquet peut être identifié grâce à un champ de type ou grâce à un numéro de séquence prédéterminé. Lorsqu'une copie du dernier paquet dudit flux est reçue, une étape S1108 est effectuée ; sinon, l'étape S1105 est réitérée.

Dans l'étape S1108, la seconde application CDA 131b obtient auprès du second équipement réseau 110b une information représentative d'un second volume de données reçues depuis l'instant T'₀ par le second équipement réseau 110b via le lien de transmission à surveiller, pour la classe de service CoS considérée. Préférentiellement, la seconde application CDA 131b requiert cette information auprès du second équipement réseau 110b dès que possible après réception de ladite copie du dernier paquet du flux de test.

La seconde application CDA 131b est alors en mesure, dans une étape S1109 suivante, de déterminer un taux de perte de paquets de test pour la classe de service CoS considérée. Pour ce faire, la seconde application CDA 131b détermine un premier écart entre le volume de données indiqué par la première application CDA 131a dans le premier paquet dudit flux à l'étape S1004 et le volume de données indiqué par la première application CDA 131a dans le dernier paquet dudit flux à l'étape S1007. De plus, la seconde application CDA 131b détermine un second écart entre le premier volume de données obtenu à l'étape S1104 et le second volume de données obtenu à l'étape S1108. A partir de ces premier et second écarts, la seconde application CDA 131a est capable d'estimer un taux de perte pour le flux de données. On considère que les pertes sont, substantiellement, équitablement distribuées entre les différents flux qui transitent sur le lien de transmission à surveiller et qui sont colorés par ladite classe de service CoS.

Dans une étape S1110 suivante, la seconde application CDA 131b crée et transmet au centre AMC 130 un rapport de perte représentatif, pour la classe de service CoS considérée, dudit taux de perte. La seconde application CDA 131b peut indiquer dans le rapport de test les volumes de données obtenus aux étapes S1004, S1007, S1104 et S1108, et/ou les premier et second écarts calculés à partir de ces volumes.

Dans une étape S1111 suivante, la seconde application CDA 131b reçoit un ordre de désactivation du mécanisme de contrôle d'amélioration de conditions de transmission du lien de transmission à surveiller pour la classe de service CoS considérée. La seconde application CDA 131b désactive alors le mécanisme de contrôle d'amélioration de conditions de transmission pour la classe de service CoS considérée. L'ordre de désactivation est transmis à la seconde application CDA 131b par le centre AMC 130. En variante, la seconde application CDA 131b décide de désactiver le mécanisme de contrôle d'amélioration de conditions de transmission après avoir transmis ledit rapport de perte au centre AMC 130. Il est mis fin à l'algorithme de la Fig. 11 suite à l'étape S1111.

Dans l'étape S1112, la seconde application CDA 131b génère un signal d'alarme spécifique à destination du centre AMC 130, et l'étape S1111 est effectuée.

Ainsi, en fonction du rapport de perte transmis par la seconde application CDA 131b, le centre AMC 130 est capable de déterminer si les conditions de transmission sur ledit lien de transmission se sont améliorées pour la classe de service CoS considérée et de décider, si lesdites conditions se sont améliorées, de faire appliquer un nouveau plan de QoS moins restrictif.

La **Fig. 12** illustre schématiquement un second algorithme de transmission d'un flux de données de test via un lien de transmission à surveiller. Considérons que l'algorithme de la Fig. 12 est mis en oeuvre par la première application CDA 131a qui est appairée avec la seconde application CDA 131b pour surveiller le lien de transmission depuis le premier équipement réseau 110a jusqu'au second équipement réseau 110b.

Dans une étape S1201, la première application CDA 131a reçoit un ordre d'activation d'un mécanisme de contrôle d'amélioration de conditions de transmission du lien de transmission à surveiller, pour une ou plusieurs classes de service CoS identifiées explicitement ou implicitement par l'ordre d'activation. La première application CDA 131a active alors le mécanisme de contrôle d'amélioration de conditions de transmission pour chaque classe de service CoS identifiée. L'ordre d'activation est transmis à la première application CDA 131a par le centre AMC 130.

Dans une étape S1202 suivante, la première application CDA 131a désactive le mécanisme de contrôle de congestion décrit précédemment en relation avec les Figs. 5 et 7. Cela évite que le mécanisme de contrôle d'amélioration de conditions de transmission ne vienne générer inutilement des alarmes de congestion qui ne seraient pas représentatives des conditions effectives de transmission sur le lien de transmission à surveiller.

Dans une étape S1203 suivante, la première application CDA 131a crée et transmet un flux de paquets de test pour chaque classe de service CoS identifiée. Pour une classe de service CoS considérée, la première application CDA 131a crée un flux de paquets de test coloré selon la classe de service CoS considérée. La taille des paquets dudit flux et la quantité de ces paquets sont prédéfinies en fonction de la classe de service CoS considérée, en fonction des conditions de transmission sur ledit de transmission qui ont conduit au plan de QoS actuellement appliqué et en fonction d'une charge nominale voulue pour la classe de service CoS considérée sur ledit lien de transmission.

Le centre AMC 130 fournit préférentiellement, dans l'ordre d'activation reçu par la première application CDA 131a à l'étape S1201, une information de débit à respecter dans le cadre de la transmission de chaque flux. Soit le nombre de paquets de la séquence est prédéfini et connu de la première application CDA 131a, soit ce nombre de paquets est aussi fourni par le centre AMC dans l'ordre d'activation. En variante, des informations de taille des paquets dudit flux et de quantité de ces paquets sont fournies par le centre AMC 130 dans l'ordre d'activation reçu par la première application CDA 131a à l'étape S1201.

Le but visé est alors d'augmenter la charge du lien de transmission pour la classe de service CoS considérée afin d'évaluer un taux de perte pour ledit flux, de manière à ensuite permettre au centre AMC 130 de déterminer si les conditions de transmission sur ledit lien de transmission pour la classe de service CoS considérée se sont améliorées.

Les paquets de chacun de ces flux sont ensuite remplis par des données de bourrage (*padding data* en anglais) pour atteindre les tailles voulues. Les paquets de chacun de ces flux sont préférentiellement conformes au protocole UDP. Le corps de ces paquets inclut une information représentative de la classe de service CoS, afin de permettre à la seconde application CDA 131b de déterminer à quelle classe de service CoS sont associés lesdits paquets, comme le sont les messages de contrôle déjà décrits en relation avec la Fig. 4. Le corps de ces paquets inclut aussi une information de numéro de séquence permettant à la seconde application CDA 131b, lorsque ladite application CDA 131b reçoit un tel paquet, de déterminer quelle est la position dudit paquet dans ledit flux.

Dans un mode de réalisation préférentiel, le premier paquet dudit flux est répété un nombre N₀ > 1 de fois, afin d'assurer que la seconde application CDA 131b reçoive au moins une copie dudit premier paquet. Plusieurs paquets de test successifs comportent alors le même numéro de séquence.

Dans un mode de réalisation préférentiel, le dernier paquet dudit flux est répété un nombre N₁ > 1 de fois, afin d'assurer que la seconde application CDA 131b reçoive au moins une copie dudit dernier paquet. Dans ce cas aussi, plusieurs paquets de test successifs comportent alors le même numéro de séquence.

Pour permettre à la seconde application CDA 131b de distinguer le premier paquet du flux de test, la première application CDA 131a peut s'appuyer sur un champ de type de paquet précisé dans le corps de chaque paquet dudit flux. Une valeur représentative d'un paquet de démarrage de séquence de test, une valeur représentative d'un paquet de terminaison de séquence de test et une valeur représentative d'un paquet intermédiaire de séquence de test peuvent ainsi être définies. En variante, la première application CDA 131a peut utiliser un numéro de séquence particulier pour débuter la séquence de test, e.g. numéro de séquence nul. En connaissant préalablement la quantité de paquets de la séquence de test, la seconde application CDA 131b est alors capable de déterminer quel doit être le numéro de séquence du dernier paquet dudit flux.

Si la seconde application CDA 131b reçoit plusieurs paquets de test avec la même séquence, ladite application CDA 131b se base sur la première copie reçue pour effectuer des calculs de taux de perte.

Une fois chacun des flux de paquets de test transmis, la première application CDA 131a réactive, dans une étape S1204, le mécanisme de contrôle de congestion décrit précédemment en relation avec les Figs. 5 et 7, et désactive, dans une étape S1205, le mécanisme de contrôle d'amélioration de conditions de transmission pour le ledit lien de transmission à surveiller.

La **Fig. 13** illustre schématiquement un second algorithme de détection d'amélioration de conditions de transmission par classe de service CoS sur un lien de transmission à surveiller, à partir d'informations relatives au flux de données de test. L'algorithme de la Fig. 13 est mis en oeuvre en conjonction avec l'algorithme de la Fig. 12. L'algorithme de la Fig. 13 est mis en oeuvre pour chaque classe de service CoS concernée par l'algorithme de la Fig. 12. Considérons que l'algorithme de la Fig. 13 est mis en oeuvre par la seconde application CDA 131b qui est appairée avec la première application CDA 131a pour surveiller le lien de transmission depuis le premier équipement réseau 110a jusqu'au second équipement réseau 110b.

Dans une étape S1301, la seconde application CDA 131b reçoit un ordre d'activation du mécanisme de contrôle d'amélioration de conditions de transmission du lien de transmission à surveiller, pour une classe de service CoS identifiée explicitement ou implicitement par l'ordre d'activation. La seconde application CDA 131b active alors le mécanisme de contrôle d'amélioration de conditions de transmission pour chaque classe de service CoS identifiée. L'ordre d'activation est transmis à la seconde application CDA 131b par le centre AMC 130.

Le centre AMC 130 fournit préférentiellement, dans l'ordre d'activation reçu par la seconde application CDA 131b à l'étape S1301, une information de débit que la première application CDA 131a va respecter dans le cadre de la transmission du flux de paquets de test correspondant. Soit le nombre de paquets de la séquence est prédéfini et connu de la seconde application CDA 131b, soit ce nombre de paquets est aussi fourni par le centre AMC dans l'ordre d'activation. En variante, des informations de taille des paquets dudit flux et de quantité de ces paquets sont fournies par le centre AMC 130 dans l'ordre d'activation reçu par la seconde application CDA 131b à l'étape S1301.

La seconde application CDA 131b initialise alors, pour la classe de service CoS considérée, une temporisation de durée prédéfinie nettement supérieure au temps de transfert d'un paquet dudit flux depuis la première application CDA 131a jusqu'à la seconde application CDA 131b. L'objectif de cette temporisation est de détecter des situations de congestion dans lesquelles aucune copie du premier paquet dudit flux n'est reçue.

Dans une étape S1302 suivante, la seconde application CDA 131b vérifie si la temporisation est écoulée. Si tel est le cas, une étape S1310 est effectuée ; sinon, une étape S1303 est effectuée.

Dans l'étape S1303, la seconde application CDA 131b détermine si une copie du premier paquet dudit flux est reçue. Comme déjà indiqué, ce premier paquet peut être identifié grâce à un champ de type ou grâce à un numéro de séquence prédéfini. Lorsqu'une copie du premier paquet dudit flux est reçue, une étape S1304 est effectuée ; sinon, l'étape S1310 est réitérée.

La seconde application CDA 131b réinitialise la temporisation avec une durée prédéfinie nettement supérieure au temps de transfert dudit flux de paquets de test depuis la première application CDA 131a jusqu'à la seconde application CDA 131b.

Dans l'étape S1304, la seconde application CDA 131b est en attente de recevoir de nouveaux paquets dudit flux. La seconde application CDA 131b est alors en mesure de déterminer quels paquets de la séquence ont été reçus et quels paquets de la séquence ont été perdus en chemin. Cela permet à la seconde application CDA 131b d'estimer, pour ledit flux, un taux de perte sur le lien de transmission à surveiller.

Dans une étape S1305 suivante, la seconde application CDA 131b vérifie si la temporisation est écoulée. Si tel est le cas, l'étape S1310 est effectuée ; sinon, une étape S1306 est effectuée.

Dans l'étape S1306, la seconde application CDA 131b détermine si une copie du dernier paquet dudit flux est reçue. Comme déjà indiqué, ce dernier paquet peut être identifié grâce à un champ de type ou grâce à un numéro de séquence prédéterminé. Lorsqu'une copie du dernier paquet dudit flux est reçue, une étape S1307 est effectuée ; sinon, l'étape S1304 est réitérée.

La seconde application CDA 131b est alors en mesure, dans l'étape S1307, de déterminer le taux de perte de paquets dudit flux.

Dans une étape S1308 suivante, la seconde application CDA 131b crée et transmet au centre AMC 130 un rapport de perte représentatif, pour la classe de service CoS considérée, dudit taux de perte.

Dans une étape S1309 suivante, la seconde application CDA 131b reçoit un ordre de désactivation du mécanisme de contrôle d'amélioration de conditions de transmission du lien de transmission à surveiller. La seconde application CDA 131b désactive alors le mécanisme de contrôle d'amélioration de conditions de transmission. L'ordre de désactivation est transmis à la seconde application CDA 131b par le centre AMC 130. En variante, la seconde application CDA 131b décide de désactiver le mécanisme de contrôle d'amélioration de conditions de transmission après avoir transmis le rapport de perte au centre AMC 130.

Ainsi, en fonction du rapport de perte transmis par la seconde application CDA 131b, le centre AMC 130 est capable de déterminer si les conditions de transmission sur ledit lien de transmission se sont améliorées et de décider, si lesdites conditions se sont améliorées, de faire appliquer un nouveau plan de QoS moins restrictif.

Dans un mode de réalisation particulier, tout message (alarmes, rapports de test,...) échangés entre le centre AMC 130 et toute application CDA du même domaine de communication que le centre AMC 130 sont colorés avec la classe de service CoS de plus forte priorité. En reprenant l'exemple DSCP susmentionné, le code de classe de service CS7 est utilisé.

## Revendications

1. Procédé de gestion de congestion d'un lien de transmission depuis un premier équipement réseau (110a) jusqu'à un second équipement réseau (110b) dans un réseau de communication par paquets, le premier équipement réseau étant associé à une première application (131a) de détection de congestion et le second équipement réseau étant associé à une seconde application (131b) de détection de congestion, et ladite seconde application mettant en oeuvre conjointement avec ladite première application un mécanisme de contrôle de congestion par classe de service sur ledit lien de transmission dans lequel ladite seconde application effectue les étapes suivantes, pour au moins une classe de service :
- recevoir (S603), pour chaque dite classe de service, un premier message de contrôle en provenance de la première application de détection de congestion, le premier message de contrôle incluant une information représentative d'un premier volume de données colorées par ladite classe de service et transmises par le premier équipement réseau jusqu'à un premier instant ;
- recevoir (S603), pour chaque dite classe de service, un second message de contrôle en provenance de la première application de détection de congestion, le second message de contrôle incluant une information représentative d'un second volume de données colorées par ladite classe de service et transmises par le premier équipement réseau jusqu'à un second instant ;
- sur réception de chaque premier message de contrôle, obtenir (S605) une information représentative d'un troisième volume de données colorées par ladite classe de service et reçues par le second équipement réseau via ledit lien de transmission jusqu'à un troisième instant ;
- sur réception de chaque second message de contrôle, obtenir (S605) une information représentative d'un quatrième volume de données colorées par ladite classe de service et reçues par le second équipement réseau via ledit lien de transmission jusqu'à un quatrième instant ;
**caractérisé en ce que** ladite seconde application effectue en outre les étapes suivantes :
- déterminer (S604) un premier écart entre ledit premier volume de données et ledit second volume de données ;
- déterminer (S606), pour chaque classe de service, un second écart entre ledit troisième volume de données et ledit quatrième volume de données ; et
- générer (S611) ou non, pour chaque classe de service, un signal d'alarme représentatif d'une congestion sur ledit lien de transmission des données colorées par ladite classe de service, en fonction d'une différence entre ledit premier écart et ledit second écart pour ladite classe de service.

2. Procédé de gestion de congestion selon la revendication 1, **caractérisé en ce que** la première application de détection de congestion effectue les étapes suivantes :
- transmettre (S503) chaque premier message de contrôle à destination de ladite seconde application, chaque premier message de contrôle étant coloré avec la classe de service pour laquelle ledit premier message est destiné ; et
- transmettre (S503) chaque second message de contrôle à destination de la seconde application, chaque second message de contrôle étant coloré avec la classe de service pour laquelle ledit second message est destiné.

3. Procédé de gestion de congestion selon la revendication 2, **caractérisé en ce que** :
- la première application de détection de congestion obtient l'information représentative dudit premier volume et l'information représentative dudit second volume auprès du premier équipement réseau par envoi de messages colorés avec la classe de service de plus forte priorité ; et
- la seconde application de détection de congestion obtient l'information représentative dudit troisième volume et l'information représentative dudit quatrième volume auprès du second équipement réseau par envoi de messages colorés avec la classe de service de plus forte priorité.

4. Procédé de gestion de congestion selon l'une quelconque des revendications 1 à 3, **caractérisé en ce que** chaque premier message et chaque second message comporte un en-tête (401) de niveau réseau permettant de colorer ledit message avec une classe de service, et **en ce que** chaque premier message et chaque second message inclut un corps de message (402) de niveau application incluant une information représentative de ladite classe de service.

5. Procédé de gestion de congestion selon l'une quelconque des revendications 1 à 4, **caractérisé en ce que** la première application de détection de congestion transmet des messages de contrôles en séquence,
et **en ce que** la seconde application de détection de congestion effectue les étapes suivantes :
- effectuer une comparaison, pour chaque classe de service, entre la différence entre ledit premier écart et ledit second écart avec un seuil prédéfini pour plusieurs couples de messages de contrôle reçus ; et
- décider de générer un signal d'alarme de congestion du lien de transmission pour une classe de service, lorsque la différence entre ledit premier écart et ledit second écart est supérieure, pour ladite classe de service, au seuil prédéfini pour un nombre N ≥ 1 de couples successifs.

6. Procédé de gestion de congestion selon l'une quelconque des revendications 1 à 5, **caractérisé en ce que** la seconde application met en oeuvre conjointement avec ladite première application un mécanisme de contrôle de congestion globale sur ledit lien de transmission, dans lequel ladite seconde application effectue les étapes suivantes :
- recevoir (S801) un premier message de contrôle général en provenance de la première application de détection de congestion, le premier message de contrôle général incluant une information représentative d'un cinquième volume de données transmises par le premier équipement réseau jusqu'à un cinquième instant, indépendamment d'une coloration desdites données transmises ;
- recevoir (S801) un second message de contrôle général en provenance de la première application de détection de congestion, le second message de contrôle général incluant une information représentative d'un sixième volume de données transmises par le premier équipement réseau jusqu'à un sixième instant, indépendamment d'une coloration desdites données transmises ;
- déterminer (S803) un troisième écart entre ledit cinquième volume de données et ledit sixième volume de données ;
- sur réception de chaque premier message de contrôle général, obtenir (S804) une information représentative d'un septième volume de données reçues par le second équipement réseau via ledit lien de transmission jusqu'à un septième instant, indépendamment d'une coloration desdites données reçues ;
- sur réception de chaque second message de contrôle général, obtenir (S804) une information représentative d'un huitième volume de données reçues par le second équipement réseau via ledit lien de transmission jusqu'à un huitième instant, indépendamment d'une coloration desdites données reçues ;
- déterminer (S805) un quatrième écart entre ledit septième volume de données et ledit huitième volume de données ; et
- générer (S808) ou non un signal d'alarme représentatif d'une congestion globale sur ledit lien de transmission, en fonction d'une différence entre ledit troisième écart et ledit quatrième écart.

7. Procédé de gestion de congestion selon la revendication 6, **caractérisé en ce que** lesdites première et seconde applications reçoivent un ordre d'activation du mécanisme de contrôle de congestion globale sur ledit lien de transmission, et **en ce que** la seconde application génère (S904) un signal d'alarme représentatif d'une rupture du lien de transmission lorsqu'une temporisation de durée prédéfinie s'écoule sans recevoir de message de contrôle général.

8. Procédé de gestion de congestion selon l'une quelconque des revendications 1 à 7, **caractérisé en ce que** ladite seconde application met en oeuvre conjointement avec ladite première application un mécanisme de contrôle d'amélioration de conditions de transmission sur ledit lien de transmission pendant lequel le mécanisme de contrôle de congestion par classe de service est stoppé et dans lequel ladite seconde application effectue les étapes suivantes, pour au moins une classe de service :
- recevoir (S1105 ; S1304) en provenance de ladite première application, pour chaque classe de service, un flux de paquets de test coloré avec ladite classe de service ;
- déterminer (S1109; S1307), pour chaque flux reçu, un taux de perte de paquets sur ledit lien de transmission ; et
- générer (S1110) un rapport de perte, pour chaque classe de service, incluant une information représentative dudit taux de perte.

9. Procédé de gestion de congestion selon la revendication 6, **caractérisé en ce que**, dans le cadre du mécanisme de contrôle d'amélioration de conditions de transmission sur ledit lien de transmission, ladite première application effectue l'étape suivante :
- générer ledit flux de paquets de test sous forme d'une séquence de paquets de test pour chaque classe de service, chaque premier et/ou chaque dernier paquet de ladite séquence étant dupliqué un nombre prédéfini de fois.

10. Procédé de gestion de congestion selon l'une quelconque des revendications 8 et 9, **caractérisé en ce qu'**un centre de gestion d'alarme (130) fait appliquer un plan de qualité de service plus restrictif dans le réseau de communication par paquets en fonction de signaux d'alarmes générés par ladite seconde application, **en ce que** le centre de gestion d'alarme ordonne auxdites première et secondes applications de mettre en oeuvre le mécanisme de contrôle d'amélioration de conditions de transmission sur ledit lien de transmission après application du plan de qualité de service plus restrictif, et **en ce que** le centre de gestion d'alarme fait appliquer un plan de qualité de service moins restrictif dans le réseau de communication par paquets en fonction de rapports de perte générés par ladite seconde application dans le cadre du mécanisme de contrôle d'amélioration de conditions de transmission sur ledit lien de transmission.

11. Procédé de gestion de congestion selon la revendication 10, **caractérisé en ce que** chaque message échangé entre le centre de gestion d'alarmes et lesdites première et seconde applications sont colorés avec la classe de service de plus haute priorité.

12. Dispositif destiné à être utilisé dans le cadre d'une gestion de congestion d'un lien de transmission depuis un premier équipement réseau (110a) jusqu'à un second équipement réseau (110b) dans un réseau de communication par paquets, le premier équipement réseau étant associé à une première application (131a) de détection de congestion et le second équipement réseau étant associé à une seconde application (131b) de détection de congestion, le dispositif mettant en oeuvre ladite seconde application et incluant, pour au moins une classe de service:
- des moyens pour recevoir (S603), pour chaque dite classe de service, un premier message de contrôle en provenance de la première application de détection de congestion, le premier message de contrôle incluant une information représentative d'un premier volume de données colorées par ladite classe de service et transmises par le premier équipement réseau jusqu'à un premier instant ;
- des moyens pour recevoir (S603), pour chaque dite classe de service, un second message de contrôle en provenance de la première application de détection de congestion, le second message de contrôle incluant une information représentative d'un second volume de données colorées par ladite classe de service et transmises par le premier équipement réseau jusqu'à un second instant ;
- des premiers moyens d'obtention pour obtenir (S605) une information représentative d'un troisième volume de données colorées par ladite classe de service et reçues par le second équipement réseau via ledit lien de transmission jusqu'à un troisième instant, lesdits premiers moyens d'obtention étant mis en oeuvre sur réception de chaque premier message de contrôle ;
- des seconds moyens d'obtention pour obtenir (S605) une information représentative d'un quatrième volume de données colorées par ladite classe de service et reçues par le second équipement réseau via ledit lien de transmission jusqu'à un quatrième instant, lesdits seconds moyens d'obtention étant mis en oeuvre sur réception de chaque second message de contrôle ;
**caractérisé en ce que** le dispositif inclut en outre :
- des moyens pour déterminer (S604) un premier écart entre ledit premier volume de données et ledit second volume de données ;
- des moyens pour déterminer (S606), pour chaque classe de service, un second écart entre ledit troisième volume de données et ledit quatrième volume de données ; et
- des moyens pour générer (S611) ou non, pour chaque classe de service, un signal d'alarme représentatif d'une congestion sur ledit lien de transmission des données colorées par ladite classe de service, en fonction d'une différence entre ledit premier écart et ledit second écart pour ladite classe de service.

13. Système de communication incluant au moins un premier dispositif et au moins un second dispositif selon la revendication 12, de telle sorte qu'une première application (131a) mise en oeuvre par chaque premier dispositif soit appairée avec la seconde application (131b) mise en oeuvre par chaque second dispositif de sorte à détecter des congestions sur un lien de transmission depuis un premier équipement réseau (110a) associé à ladite première application jusqu'à un second équipement réseau (110b) associé à ladite seconde application,
et en ce que chaque premier dispositif inclut, pour au moins une classe de service :
- des moyens pour transmettre (S503), pour chaque dite classe de service, un premier message de contrôle à destination de ladite seconde application, chaque premier message de contrôle étant coloré avec la classe de service pour laquelle ledit premier message est destiné et incluant une information représentative d'un premier volume de données colorées par ladite classe de service et transmises par le premier équipement réseau jusqu'à un premier instant ; et
- des moyens pour transmettre (S503), pour chaque dite classe de service, un second message de contrôle à destination de la seconde application de détection de congestion, chaque second message de contrôle étant coloré avec la classe de service pour laquelle ledit second message est destiné et incluant une information représentative d'un second volume de données colorées par ladite classe de service et transmises par le premier équipement réseau jusqu'à un second instant.

## Patentansprüche

1. Überlastungsverwaltungsverfahren einer Übertragungsverbindung von einer ersten Netzausrüstung (110a) bis zu einer zweiten Netzausrüstung (110b) in einem Paketkommunikationsnetz, wobei die erste Netzausrüstung einer ersten Anwendung (131a) zur Überlastungserfassung und die zweite Netzausrüstung einer zweiten Anwendung (131b) zur Überlastungserfassung zugeordnet ist, und die zweite Anwendung zusammen mit der ersten Anwendung einen Überlastungskontrollmechanismus pro Dienstklasse auf der Übertragungsverbindung anwendet, wobei die zweite Anwendung für mindestens eine Dienstklasse die folgenden Schritte ausführt:
- Empfangen (S603), für jede Dienstklasse, einer ersten Kontrollnachricht von der ersten Anwendung zur Überlastungserfassung, wobei die erste Kontrollnachricht eine für ein erstes Volumen von Daten repräsentative Information enthält, die von der Dienstklasse gefärbt und von der ersten Netzausrüstung bis zu einem ersten Zeitpunkt übertragen werden;
- Empfangen (S603), für jede Dienstklasse, einer zweiten Kontrollnachricht von der ersten Anwendung zur Überlastungserfassung, wobei die zweite Kontrollnachricht eine für ein zweites Volumen von Daten repräsentative Information enthält, die von der Dienstklasse gefärbt und von der ersten Netzausrüstung bis zu einem zweiten Zeitpunkt übertragen werden;
- bei Empfang jeder ersten Kontrollnachricht, Erhalt (S605) einer für ein drittes Volumen von Daten repräsentativen Information, die von der Dienstklasse gefärbt und von der zweiten Netzausrüstung über die Übertragungsverbindung bis zu einem dritten Zeitpunkt empfangen werden;
- bei Empfang jeder zweiten Kontrollnachricht, Erhalt (S605) einer für ein viertes Volumen von Daten repräsentativen Information, die von der Dienstklasse gefärbt und von der zweiten Netzausrüstung über die Übertragungsverbindung bis zu einem vierten Zeitpunkt empfangen werden;
**dadurch gekennzeichnet, dass** die zweite Anwendung außerdem die folgenden Schritte ausführt:
- Bestimmen (S604) einer ersten Abweichung zwischen dem ersten Datenvolumen und dem zweiten Datenvolumen;
- Bestimmen (S606), für jede Dienstklasse, einer zweiten Abweichung zwischen dem dritten Datenvolumen und dem vierten Datenvolumen; und
- Erzeugen (S611) oder nicht, für jede Dienstklasse, eines für eine Überlastung auf der Übertragungsverbindung der von der Dienstklasse gefärbten Daten repräsentativen Alarmsignals abhängig von einer Differenz zwischen der ersten Abweichung und der zweiten Abweichung für die Dienstklasse.

2. Überlastungsverwaltungsverfahren nach Anspruch 1, **dadurch gekennzeichnet, dass** die erste Anwendung einer Überlastungserfassung die folgenden Schritte ausführt:
- Übertragen (S503) jeder ersten Kontrollnachricht an die zweite Anwendung, wobei jede erste Kontrollnachricht mit der Dienstklasse gefärbt ist, für die die erste Nachricht bestimmt ist; und
- Übertragen (S503) jeder zweiten Kontrollnachricht an die zweite Anwendung, wobei jede zweite Kontrollnachricht mit der Dienstklasse gefärbt ist, für die die zweite Nachricht bestimmt ist.

3. Überlastungsverwaltungsverfahren nach Anspruch 2, **dadurch gekennzeichnet, dass**:
- die erste Anwendung einer Überlastungserfassung die für das erste Volumen repräsentative Information und die für das zweite Volumen repräsentative Information bei der ersten Netzausrüstung durch Senden von mit der Dienstklasse höchster Priorität gefärbten Nachrichten erhält; und
- die zweite Anwendung einer Überlastungserfassung die für das dritte Volumen repräsentative Information und die für das vierte Volumen repräsentative Information bei der zweiten Netzausrüstung durch Senden von mit der Dienstklasse höchster Priorität gefärbten Nachrichten erhält.

4. Überlastungsverwaltungsverfahren nach einem der Ansprüche 1 bis 3, **dadurch gekennzeichnet, dass** jede erste Nachricht und jede zweite Nachricht ein Netzebene-Kopfelement (401) enthält, das es ermöglicht, die Nachricht mit einer Dienstklasse zu färben, und dass jede erste Nachricht und jede zweite Nachricht einen Anwendungsebene-Nachrichtenkörper (402) enthält, der eine für die Dienstklasse repräsentative Information enthält.

5. Überlastungsverwaltungsverfahren nach einem der Ansprüche 1 bis 4, **dadurch gekennzeichnet, dass** die erste Anwendung einer Überlastungserfassung Kontrollnachrichten in Folge überträgt, und dass die zweite Anwendung einer Überlastungserfassung die folgenden Schritte ausführt:
- Ausführen eines Vergleichs, für jede Dienstklasse, der Differenz zwischen der ersten Abweichung und der zweiten Abweichung mit einer vordefinierten Schwelle für mehrere empfangene Paare von Kontrollnachrichten; und
- Entscheiden, ein Alarmsignal der Überlastung der Übertragungsverbindung für eine Dienstklasse zu erzeugen, wenn die Differenz zwischen der ersten Abweichung und der zweiten Abweichung für die Dienstklasse für eine Anzahl N ≥ 1 aufeinanderfolgender Paare höher ist als die vordefinierte Schwelle.

6. Überlastungsverwaltungsverfahren nach einem der Ansprüche 1 bis 5, **dadurch gekennzeichnet, dass** die zweite Anwendung zusammen mit der ersten Anwendung einen Kontrollmechanismus globaler Überlastung auf der Übertragungsverbindung anwendet, wobei die zweite Anwendung die folgenden Schritte ausführt:
- Empfangen (S801) einer ersten allgemeinen Kontrollnachricht von der ersten Anwendung einer Überlastungserfassung, wobei die erste allgemeine Kontrollnachricht eine für ein fünftes Volumen von Daten, die von der ersten Netzausrüstung bis zu einem fünften Zeitpunkt übertragen werden, repräsentative Information enthält, unabhängig von einer Färbung der übertragenen Daten;
- Empfangen (S801) einer zweiten allgemeinen Kontrollnachricht von der ersten Anwendung einer Überlastungserfassung, wobei die zweite allgemeine Kontrollnachricht eine für ein sechstes Volumen von Daten, die von der ersten Netzausrüstung bis zu einem sechsten Zeitpunkt übertragen werden, repräsentative Information enthält, unabhängig von einer Färbung der übertragenen Daten;
- Bestimmen (S803) einer dritten Abweichung zwischen dem fünften Datenvolumen und dem sechsten Datenvolumen;
- bei Empfang jeder ersten allgemeinen Kontrollnachricht, Erhalt (S804) einer für ein siebtes Volumen von Daten, die von der zweiten Netzausrüstung über die Übertragungsverbindung bis zu einem siebten Zeitpunkt empfangen werden, repräsentativen Information, unabhängig von einer Färbung der empfangenen Daten;
- bei Empfang jeder zweiten allgemeinen Kontrollnachricht, Erhalt (S804) einer für ein achtes Volumen von Daten, die von der zweiten Netzausrüstung über die Übertragungsverbindung bis zu einem achten Zeitpunkt empfangen werden, repräsentativen Information, unabhängig von einer Färbung der empfangenen Daten;
- Bestimmen (S805) einer vierten Abweichung zwischen dem siebten Datenvolumen und dem achten Datenvolumen; und
- Erzeugen (S808) oder nicht eines für eine globale Überlastung auf der Übertragungsverbindung repräsentativen Alarmsignals abhängig von einer Differenz zwischen der dritten Abweichung und der vierten Abweichung.

7. Überlastungsverwaltungsverfahren nach Anspruch 6, **dadurch gekennzeichnet, dass** die erste und die zweite Anwendung einen Aktivierungsbefehl des Kontrollmechanismus einer globalen Überlastung auf der Übertragungsverbindung empfangen, und dass die zweite Anwendung ein für eine Unterbrechung der Übertragungsverbindung repräsentatives Alarmsignal erzeugt (S904), wenn eine Verzögerung vordefinierter Dauer vergeht, ohne eine allgemeine Kontrollnachricht zu empfangen.

8. Überlastungsverwaltungsverfahren nach einem der Ansprüche 1 bis 7, **dadurch gekennzeichnet, dass** die zweite Anwendung zusammen mit der ersten Anwendung einen Kontrollmechanismus zur Verbesserung von Übertragungsbedingungen auf der Übertragungsverbindung einsetzt, während dessen der Kontrollmechanismus einer Überlastung pro Dienstklasse gestoppt wird und wobei die zweite Anwendung die folgenden Schritte für mindestens eine Dienstklasse ausführt:
- Empfangen (S1105; S1304) von der ersten Anwendung, für jede Dienstklasse, eines mit der Dienstklasse gefärbten Testpaketflusses;
- Bestimmen (S1109; S1307), für jeden empfangenen Fluss, einer Paketverlustrate auf der Übertragungsverbindung; und
- Erzeugen (S1110) eines Verlustberichts, für jede Dienstklasse, der eine für die Verlustrate repräsentative Information enthält.

9. Überlastungsverwaltungsverfahren nach Anspruch 6, **dadurch gekennzeichnet, dass** im Rahmen des Kontrollmechanismus zur Verbesserung von Übertragungsbedingungen auf der Übertragungsverbindung die erste Anwendung den folgenden Schritt ausführt:
- Erzeugen des Testpaketflusses in Form einer Folge von Testpaketen für jede Dienstklasse, wobei jedes erste und/oder jedes letzte Paket der Folge mit einer vordefinierten Häufigkeit dupliziert wird.

10. Überlastungsverwaltungsverfahren nach einem der Ansprüche 8 und 9, **dadurch gekennzeichnet, dass** ein Alarmverwaltungszentrum (130) abhängig von von der zweiten Anwendung erzeugten Alarmsignalen einen restriktiveren Dienstqualitätsplan im Paketkommunikationsnetz anwenden lässt, dass das Alarmverwaltungszentrum den ersten und zweiten Anwendungen befiehlt, den Kontrollmechanismus zur Verbesserung von Übertragungsbedingungen auf der Übertragungsverbindung nach Anwendung des restriktiveren Dienstqualitätsplans einzusetzen, und dass das Alarmverwaltungszentrum einen weniger restriktiven Dienstqualitätsplan im Paketkommunikationsnetz abhängig von durch die zweite Anwendung im Rahmen des Kontrollmechanismus der Verbesserung von Übertragungsbedingungen auf der Übertragungsverbindung erzeugten Verlustberichten anwenden lässt.

11. Überlastungsverwaltungsverfahren nach Anspruch 10, **dadurch gekennzeichnet, dass** jede zwischen dem Alarmverwaltungszentrum und den ersten und zweiten Anwendungen ausgetauschte Nachricht mit der Dienstklasse höchster Priorität gefärbt wird.

12. Vorrichtung, die dazu bestimmt ist, im Rahmen einer Überlastungsverwaltung einer Übertragungsverbindung von einer ersten Netzausrüstung (110a) bis zu einer zweiten Netzausrüstung (110b) in einem Paketkommunikationsnetz verwendet zu werden, wobei die erste Netzausrüstung einer ersten Anwendung (131a) zur Überlastungserfassung und die zweite Netzausrüstung einer zweiten Anwendung (131b) zur Überlastungserfassung zugeordnet ist, wobei die Vorrichtung die zweite Anwendung einsetzt und für mindestens eine Dienstklasse enthält:
- Einrichtungen zum Empfang (S603), für jede Dienstklasse, einer ersten Kontrollnachricht von der ersten Anwendung zur Überlastungserfassung, wobei die erste Kontrollnachricht eine für ein erstes Volumen von Daten, die von der Dienstklasse gefärbt und von der Netzausrüstung bis zu einem ersten Zeitpunkt übertragen werden, repräsentative Information enthält;
- Einrichtungen zum Empfang (S603), für jede Dienstklasse, einer zweiten Kontrollnachricht von der ersten Anwendung zur Überlastungserfassung, wobei die zweite Kontrollnachricht eine für ein zweites Volumen von Daten, die von der Dienstklasse gefärbt und von der ersten Netzausrüstung bis zu einem zweiten Zeitpunkt übertragen werden, repräsentative Information enthält;
- erste Erhaltungseinrichtungen, um eine für ein drittes Volumen von Daten, die von der Dienstklasse gefärbt und von der zweiten Netzausrüstung über die Übertragungsverbindung bis zu einem dritten Zeitpunkt empfangen werden, repräsentative Information zu erhalten (S605), wobei die ersten Erhaltungseinrichtungen bei Empfang jeder ersten Kontrollnachricht eingesetzt werden;
- zweite Erhaltungseinrichtungen, um eine für ein viertes Volumen von Daten, die von der Dienstklasse gefärbt und von der zweiten Netzausrüstung über die Übertragungsverbindung bis zu einem vierten Zeitpunkt empfangen werden, repräsentative Information zu erhalten (S605), wobei die zweiten Erhaltungseinrichtungen bei Empfang jeder zweiten Kontrollnachricht eingesetzt werden;
**dadurch gekennzeichnet, dass** die Vorrichtung außerdem enthält:
- Einrichtungen zur Bestimmung (S604) einer ersten Abweichung zwischen dem ersten Datenvolumen und dem zweiten Datenvolumen;
- Einrichtungen zur Bestimmung (S606), für jede Dienstklasse, einer zweiten Abweichung zwischen dem dritten Datenvolumen und dem vierten Datenvolumen; und
- Einrichtungen zum Erzeugen (S611) oder nicht, für jede Dienstklasse, eines für eine Überlastung auf der Übertragungsverbindung der von der Dienstklasse gefärbten Daten repräsentativen Alarmsignals abhängig von einer Differenz zwischen der ersten Abweichung und der zweiten Abweichung für die Dienstklasse.

13. Kommunikationssystem, das mindestens eine erste Vorrichtung und mindestens eine zweite Vorrichtung nach Anspruch 12 enthält, so dass eine erste Anwendung (131a), die von jeder ersten Vorrichtung eingesetzt wird, mit der zweiten Anwendung (131b) paarweise verbunden wird, die von jeder zweiten Vorrichtung eingesetzt wird, um Überlastungen auf einer Übertragungsverbindung von einer ersten Netzausrüstung (110a), die der ersten Anwendung zugeordnet ist, bis zu einer zweiten Netzausrüstung (110b) zu erfassen, die der zweiten Anwendung zugeordnet ist,
und dass jede erste Vorrichtung für mindestens eine Dienstklasse enthält:
- Einrichtungen zur Übertragung (S503), für jede Dienstklasse, einer ersten Kontrollnachricht an die zweite Anwendung, wobei jede erste Kontrollnachricht mit der Dienstklasse gefärbt ist, für die die erste Nachricht bestimmt ist, und eine für ein erstes Volumen von Daten, die von der Dienstklasse gefärbt sind und von der ersten Netzausrüstung bis zu einem ersten Zeitpunkt übertragen werden, repräsentative Information enthält; und
- Einrichtungen zur Übertragung (S503), für jede Dienstklasse, einer zweiten Kontrollnachricht an die zweite Anwendung zur Überlastungserfassung, wobei jede zweite Kontrollnachricht mit der Dienstklasse gefärbt ist, für die die zweite Nachricht bestimmt ist, und eine für ein zweites Volumen von Daten, die von der Dienstklasse gefärbt sind und von der ersten Netzausrüstung bis zu einem zweiten Zeitpunkt übertragen werden, repräsentative Information enthält.

## Claims

1. Method for managing congestion on a transmission link from a first item of network equipment (110a) to a second item of network equipment (110b) in a packet communication network, the first item of network equipment being associated with a first congestion detection application (131a) and the second item of network equipment being associated with a second congestion detection application (131b), and said second application implementing, conjointly with said first application, a congestion control mechanism per class of service on said transmission link in which said second application performs the following steps, for at least one class of service:
- receiving (S603), for each said class of service, a first control message coming from the first congestion detection application, the first control message including information representing a first volume of data coloured by said class of service and transmitted by the first item of network equipment up to a first instant;
- receiving (603), for each said class of service, a second control message coming from the first congestion detection application, the second control message including information representing a second volume of data coloured by said class of service and transmitted by the first item of network equipment up to a second instant;
- on reception of each first control message, obtaining (S605) information representing a third volume of data coloured by said class of service and received by the second item of network equipment via said transmission link up to a third instant;
- on reception of each second control message, obtaining (S605) information representing a fourth volume of data coloured by said class of service and received by the second item of network equipment via said transmission link up to a fourth instant;
**characterized in that** said second application further performs the following steps:
- determining (S604) a first divergence between said first volume of data and said second volume of data;
- determining (S606), for each class of service, a second divergence between said third volume of data and said fourth volume of data; and
- generating (S611) or not, for each class of service, an alarm signal representing congestion on said transmission link of the data coloured by said class of service, according to a difference between said first divergence and said second divergence for said class of service.

2. Method for managing congestion according to claim 1, **characterised in that** the first congestion detection application performs the following steps:
- transmitting (S503) each first control message to said second application, each first control message being coloured with the class of service for which said first message is intended; and
- transmitting (S503) each second control message to the second application, each second control message being coloured with the class of service for which said second message is intended.

3. Method for managing congestion according to claim 2, **characterised in that**:
- the first congestion detection application obtains the information representing said first volume and the information representing said second volume from the first item of network equipment by sending messages coloured with the class of service having the highest priority; and
- the second congestion detection application obtains the information representing said third volume and the information representing said fourth volume from the second item of network equipment by sending messages coloured with the class of service having the highest priority.

4. Method for managing congestion according to any one of claims 1 to 3, **characterised in that** each first message and each second message comprises a network level header (401) for colouring said message with a class of service, and **in that** each first message and each second message includes an application level message payload (402) including information representing said class of service.

5. Method for managing congestion according to any one of claims 1 to 4, **characterised in that** the first congestion detection application transmits control messages in a sequence,
and **in that** the second congestion detection application performs the following steps:
- making a comparison, for each class of service, between the difference between said first divergence and said second divergence with a predefined threshold for a plurality of pairs of received control messages; and
- deciding to generate an alarm signal for congestion on the transmission link for a class of service, when the difference between said first divergence and said second divergence is greater, for said class of service, than the predefined threshold for a number N ≥ 1 of successive pairs.

6. Method for managing congestion according to any one of claims 1 to 5, **characterised in that** the second application implements, conjointly with said first application, a global congestion control mechanism on said transmission link, in which said second application performs the following steps:
- receiving (S801) a first general control message coming from the first congestion detection application, the first general control message including information representing a fifth volume of data transmitted by the first item of network equipment up to a fifth instant, independently of a colouring of said transmitted data;
- receiving (S801) a second general control message coming from the first congestion detection application, the second general control message including information representing a sixth volume of data transmitted by the first item of network equipment up to a sixth instant, independently of a colouring of said transmitted data;
- determining (S803) a third divergence between said fifth volume of data and said sixth volume of data;
- on reception of each first general control message, obtaining (S804) information representing a seventh volume of data received by the second item of network equipment via said transmission link up to a seventh instant, independently of a colouring of said received data;
- on reception of each said second general control message, obtaining (S804) information representing an eighth volume of data received by the second item of network equipment via said transmission link up to an eighth instant, independently of a colouring of said received data;
- determining (S805) a fourth divergence between said seventh volume of data and said eighth volume of data; and
- generating (S808) or not an alarm signal representing global congestion on said transmission link, according to a difference between said third divergence and said fourth divergence.

7. Method for managing congestion according to claim 6, **characterised in that** said first and second applications receive an instruction to activate the global congestion control mechanism on said transmission link, and **in that** the second application generates (S904) an alarm signal representing a breakdown in the transmission link when a timer of predefined duration elapses without receiving a general control message.

8. Method for managing congestion according to any of claims 1 to 7, **characterised in that** said second application implements, conjointly with said first application, a mechanism for checking improvement in the transmission conditions on said transmission link during which the congestion control mechanism per class of service is stopped and in which said second application performs the following steps, for at least one class of service:
- receiving (S1105; S1304), coming from said first application, for each class of service, a stream of test packets coloured with said class of service;
- determining (S1109; S1307) for each received stream, a packet loss level on said transmission link; and
- generating (S1110) a loss report, for each class of service, including information representing said loss rate.

9. Method for managing congestion according to claim 6, **characterised in that**, in the context of the mechanism for checking improvement in the transmission conditions on said transmission link, said first application performs the following step:
- generating said test packet stream in the form of a sequence of test packets for each class of service, each first and/or each last packet in said sequence being duplicated a predefined number of times.

10. Method for managing congestion according to any one of claims 8 and 9, **characterised in that** an alarm management centre (130) enforces a more restrictive quality of service plan in the packet communication network according to alarm signals generated by said second application, **in that** the alarm management centre instructs said first and second applications to implement the mechanism for checking improvement in the transmission conditions on said transmission link after application of the more restrictive quality of service plan, and **in that** the alarm management centre enforces a less restrictive quality of service plan in the packet communication network according to loss reports generated by said second application in the context of the mechanism for checking improvement in the transmission conditions on said transmission link.

11. Method for managing congestion according to claim 10, **characterised in that** each message exchanged between the alarm management centre and said first and second applications are coloured with the class of service having the highest priority.

12. Device aimed at being used in the context of management of congestion on a transmission link from a first item of network equipment (110a) to a second item of network equipment (110b) in a packet communication network, the first item of network equipment being associated with a first congestion detection application (131a) and the second item of network equipment being associated with a second congestion detection application (131b), the device implementing said second application and, for at least one class of service, including:
- means for receiving (S603), for each said class of service, a first control message coming from the first congestion detection application, the first control message including information representing a first volume of data coloured by said class of service and transmitted by the first item of network equipment up to a first instant;
- means for receiving (S603), for each said class of service, a second control message coming from the first congestion detection application, the second control message including information representing a second volume of data coloured by a said class of service and transmitted by the first item of network equipment up to a second instant;
- first obtaining means for obtaining (605) information representing a third volume of data coloured by said class of service and received by the second item of network equipment via said transmission link up to a third instant, said first obtaining means being implemented on reception of each first control message;
- second obtaining means for obtaining (S605) information representing a fourth volume of data coloured by said class of service and received by the second item of network equipment via said transmission link up to a fourth instant, said second obtaining means being implemented on reception of each second control message;
**characterized in that** the device further includes:
- means for determining (S604) a first divergence between said first volume of data and said second volume of data;
- means for determining (S606), for each class of service, a second divergence between said third volume of data and said fourth volume of data; and
- means for generating (S611) or not, for each class of service, an alarm signal representing congestion on said transmission link of the data coloured by said class of service, according to a difference between said first divergence and said second divergence for said class of service.

13. Communication system including at least one first device and at least one second device according to claim 12, so that a first application (131a) implemented by each first device is paired with the second application (131b) implemented by each second device so as to detect congestions on a transmission link from a first item of network equipment (110a) associated with said first application to a second item of network equipment (110b) associated with said second application
and in that each first device includes, for at least one class of service:
- means for transmitting (S503), for each said class of service a first control message intended for said second application, each first control message being coloured with the class of service for which said first message is intended and including information representing a first volume of data coloured by said class of transmission and transmitted by the first item of network equipment up to a first instant; and
- means for transmitting (S503), for each said class of service, a second control message intended for the second congestion detection application, each second control message being coloured with the class of service for which said second message is intended and including information representing a second volume of data coloured by said class of service and transmitted by the first item of network equipment up to a second instant.
